# EUROPÄISCHE PATENTSCHRIFT

(11) **EP 1 289 893 B1**
(45) Veröffentlichungstag und Bekanntmachung des Hinweises auf die Patenterteilung: **12.11.2003**
(21) Anmeldenummer: 01933994.4
(22) Anmeldetag: 21.05.2001
(51) Int. Cl.: C02F 11/06, C02F 11/12, C02F 1/74, C02F 1/72, C02F 1/78, C02F 1/32

(54) **VORRICHTUNG UND VERFAHREN ZUR BEHANDLUNG EINES KOHLENWASSERSTOFFHALTIGEN ABFALLSTOFFES**
DEVICE AND METHOD FOR TREATING A REFUSE MATERIAL CONTAINING HYDROCARBONS
DISPOSITIF ET PROCEDE POUR TRAITER DES DECHETS CONTENANT DES HYDROCARBURES

(30) Priorität: 14.06.2000 AT 10282000; 22.09.2000 AT 7032000 U; 13.02.2001 AT 2132001
(43) Veröffentlichungstag der Anmeldung: 12.03.2003
(73) Patentinhaber: Voest-Alpine Industrieanlagenbau GmbH & Co., 4020 Linz (AT)
(72) Erfinder: BSIRSKE, Werner, A-4050 Traun (AT); ZOBERNIG, Andreas, A-4060 Leonding (AT); FLEISCHANDERL, Alexander, A-4645 Grünau (AT); LANZERSTORFER, Christof, A-4600 Wels (AT)
(74) Vertreter: VA TECH Patente GmbH & Co
(86) Internationale Anmeldenummer: EP0105791
(87) Internationale Veröffentlichungsnummer: WO01096249

(56) Entgegenhaltungen:
- EP-A- 0 126 619
- EP-A- 0 446 779
- EP-A- 0 891 799
- WO-A-99/58459
- GB-A- 2 033 065
- PATENT ABSTRACTS OF JAPAN vol. 1998, no. 11, 30. September 1998 (1998-09-30) -& JP 10 169957 A (SUMITOMO METAL IND LTD;KASHIMA SENKO KK; SUMIKIN MANAG KK), 26. Juni 1998 (1998-06-26) -& DATABASE WPI Section Ch, Week 9836 Derwent Publications Ltd., London, GB; Class D15, AN 1998-417053 XP002174541 & JP 10 169957 A (KASHIMA SENKO KK), 26. Juni 1998 (1998-06-26)

## Beschreibung

Die Erfindung betrifft eine Vorrichtung sowie ein Verfahren zur Behandlung eines kohlenwasserstoffhältigen Abfallstoffes, insbesondere eines Walzzunderschlammes und/oder Schleifschlammes, wobei der Abfallstoff in einem Trockner, vorzugsweise unter Bewegung, durch indirekte Wärmezufuhr erwärmt und dabei von Kohlenwasserstoffen, gegebenenfalls gemeinsam mit anderen flüchtigen Komponenten, insbesondere H₂O, befreit wird.

Mit Kohlenwasserstoffen (organischen Verbindungen) kontaminierte Abfallstoffe, insbesondere Feststoffe und Schlämme, fallen einerseits in vielen Produktionsprozessen, z.B. als Schleifschlämme oder Walzzunder, andererseits auch beim ungewollten Austritt von Kohlenwasserstoffen in die Umwelt, wie beispielsweise als ölkontaminiertes Erdreich, an.

Bei der Stahlverarbeitung, insbesondere bei der Umformung der Brammen in einem Walzwerk fällt Zunder, insbesondere Walzzunder an. Zunder entsteht darüberhinaus auch beim Betrieb von Stranggußanlagen.

Bedingt durch Betriebsmittel, insbesondere Fette und Öle, wie sie vorzugsweise als reibungsvermindernde Zusätze zum Einsatz gelangen, erfolgt eine Kontamination des Zunders, wodurch eine Wiederverwertung bedeutend erschwert oder bislang gar unmöglich wurde.

Kohlenwasserstoffkontaminierte Abfallstoffe stellen für die Umwelt ein beträchtliches Problem dar, da kein effizientes und zugleich kostengünstiges Verfahren zur Aufarbeitung dieser Abfallstoffe zur Verfügung steht.

Im Stand der Technik sind verschiedene Verfahren zur Behandlung von kohlenwasserstoffkontaminierten Abfallstoffen bekannt.

Beispielsweise sind verschiedene Methoden bekannt, einen Walzzunderschlamm, wie insbesondere eine Mischung aus Zunder, Öl, Fett und Wasser genannt wird, einer Wiederverwertung zu zuführen. Dabei wird der Walzzunderschlamm, der im Zuge der Abwasseraufbereitung des Hüttenwerks bzw. Walzwerkes anfällt, durch spezielle Verfahren und Vorrichtungen nutzbar gemacht.

In der Veröffentlichung EP0373577A1 wird ein zweistufiges Verfahren sowie eine Vorrichtung zur Aufbereitung von, organische Anteile aufweisenden, Klär- oder Industrieschlämmen gelehrt. Im Rahmen des gelehrten Konversionsverfahren werden die Schlämme mechanisch vorentwässert, in den Innenraum eines indirekt beheizten Stetigförderers befdrdert und dort einer Aufheizung bei gleichzeitigem Austrieb der leichtflüchtigen Komponenten ausgesetzt. In einer darauffolgenden zweiten Stufe erfolgt ein Verweilen bei Konversionstemperatur zum restlichen Austrieb der flüchtigen Komponenten aus dem Feststoffprodukt. In der Praxis stellt sich diese Vorgangsweise als vergleichsweise ineffizient dar, da zum Austreiben der Kohlenwasserstoffe durch die dargestellte Vorrichtung sowie Verfahrensweise eine Aufheizung des Schlammes auf eine relativ hohe Temperatur erforderlich ist. Ein wirtschaftlicher Betrieb einer derartigen Anlage kann daher nicht erreicht werden.

Die Veröffentlichung DE19715839A1 lehrt ein Verfahren sowie eine Vorrichtung zur Reinigung von öl- und wasserhältigen Walzzunderschlämmen, wobei die Schlämme einer zweistufigen Behandlung unterzogen werden. In einem ersten Schritt wird durch Erwärmen der Schlämme Wasser verflüchtigt In einem zweiten Schritt wird der getrocknete Schlamm bei erhöhter Temperatur einer Vakuumbehandlung zur Verflüchtigung der Kohlenwasserstoffe unterzogen. Die Praxis zeigt eine relative Ineffizienz der Anlage, da insbesondere die Erzeugung des, zur Verflüchtigung der Kohlenwasserstoffe erforderlichen Vakuums mit hohen Errichtungs- und Betriebskosten verbünden ist.

Zweistufige Verfahren sind darüberhinaus im Allgemeinen durch einen hohen apparativen sowie steuer- und regelungstechnischen Aufwand gekennzeichnet.

Die Veröffentlichung AT400579B lehrt ein einstufiges Verfahren zur Verwertung von mit organisch-chemischen Verunreinigungen, wie beispielsweise Öl oder Fett versetzten und gegebenenfalls feuchten und metallhältigem Material, wie beispielsweise Zunder oder Spänen, wobei das Material in reduzierender Atmosphäre durch indirekte Erwärmung bis über die Siedetemperatur der höchstsiedenden Fraktion der organischen Verunreinigung erhitzt, und dabei zur Vermeidung von Kondensation mit "nichtoxidierendem Trägergas" gespillt wird. Dieses Verfahren erweist sich in der Praxis ebenfalls als unwirtschaftlich.

Die Veröffentlichung EP0891799A1 betrifft ein Verfahren und eine Anlage zur Entölung fettiger Substanzen. In der Praxis erweist sich dieses Verfahren jedoch als wenig effizient.

Der vorliegenden Erfindung liegt daher die Aufgabe zugrunde, die Nachteile aus dem Stand der Technik zu überwinden, und ein einfaches und wirtschaftliches Verfahren entsprechend dem Oberbegriff des Anspruchs 1, sowie eine geeignete Vorrichtung zur Durchführung des genannten Verfahrens entsprechend dem Oberbegriff des Anspruchs 17 zu entwickeln.

Diese Aufgabe wird entsprechend dem erfindungsgemäßen Verfahren nach dem kennzeichnenden Teil des Anspruchs 1, sowie entsprechend der erfindungsgemäßen Vorrichtung nach dem kennzeichnenden Teil des Anspruchs 17 gelöst.

Mit dem Abbau der Kohlenwasserstoffe durch chemische und/oder strahlungstechnische Hilfsmittel, welche eine Zerlegung der schwerflüchtigen Kohlenwasserstoffe in leichtflüchtige Kohlenwasserstoffe, insbesondere von Kohlenwasserstorfen mit hohem Molekulargewicht in Kohlenwasserstoffe mit niedrigerem Molekulargewicht, insbesondere über eine selektive Oxidation, bewirken, kann auch bei niedrigen Temperaturen eine effektive Reinigung des Abfallstoffes von Kohlenwasserstoffen erfolgen.

Das erfindungsgemäße Verfahren zeichnet sich darüber hinaus dadurch aus, dass eine indirekte Erwärmung des Abfallstoffes zum Einsatz gelangt.

Im Stand der Technik wird zur Erreichung wirtschaftlicher Behandlungszeiten vor allem die direkte Erwärmung eingesetzt, wohingegen, insbesondere bei größeren Anlagen, die indirekte Erwärmung, beispielsweise durch die Gefäßwand eines Trockners, insofern aus wirtschaftlichen Gründen ausscheidet, als bei der indirekten Erwärmung, im Gegensatz zu einer direkten Beheizung durch eine Flamme und heißes Gas, die Erwärmung alleine durch Wärmeleitung erfolgt. Entsprechend langsam wird die Betriebstemperatur im Trockner erreicht.

Da sich die indirekte Erwärmung, insbesondere aufgrund umwelttechnischer Überlegungen, aber als besonders vorteilhaft darstellt, wird demnach, wie nach einer bevorzugten Ausführungsform des erfindungsgemäßen Verfahrens vorgeschlagen, die Verfahrenstemperatur im Trockner niedrig gehalten. Auf diese Weise kann der Zeitaufwand für die Beheizung, insbesondere im Fall des Anfahrens des kalten Trockners, minimiert werden.

Durch den Einsatz von chemischen und/oder strahlungstechnischen Hilfsmitteln zur Zerlegung der Kohlenwasserstoffe, wodurch eine Absenkung der mittleren Verflüchtigungstemperatur der Kohlenwasserstoffe herbeigeführt wird, wird eine deutliche Beschleunigung des Reinigungsvorganges, insbesondere bei den vorherrschenden niedrigen Behandlungstemperaturen, erreicht.

Die erhöhte Wirtschaftlichkeit des Verfahrens gegenüber dem Stand der Technik ergibt sich einerseits durch einen niedrigeren Heizenergiebedarl und andererseits, bedingt durch die kürzere Behandlungsdauer und die geringere maximale Betriebstemperatur, durch kleinere, kostengünstigere Verfahrensvorrichtungen.

Die Erwärmung des Abfallstoffes erfolgt vorzugsweise unter Bewegung desselben, um eine rasche und gleichmäßige Aufheizung zu gewährleisten.

Die Bewegung der Feststoffe und/oder Schlämme im Gefäß kann nach einer bevorzugten Ausführungsform des erfindungsgemäßen Verfahrens durch eine Bewegung des Gefäßes, beispielsweise durch Drehen des Gefäßes, und/oder durch Bewegung einer Vorrichtung im Gefäß, beispielsweise durch Drehen eines Werkzeuges, erfolgen.

Nach verschiedenen Ausfühnangsformen der Erfindung ist es möglich, das Verfahren bei Atmosphärendruck, bei Über-, oder Unterdruck zu betreiben. Bei Betrieb mit Überdruck würde beispielsweise ein Gebläse zum Absaugen der Abgase aus dem Trockner entfallen. Bei Betrieb des Verfahrens bei Über- oder Unterdruck wäre eine gasdichte Ausführung der Materialzufuhr und Materialabfuhr vorteilhaft.

Nach einer besonderen Ausführungsform der Erfindung erfolgt der Abbau der Kohlenwasserstoffe bei Temperaturen unterhalb von 400°C.

Nach einer weiteren Ausführungsform des erfindungsgemäßen Verfahrens wird in dem Trockner eine auf das Heizmedium bezogene maximale Temperatur von 350°C, insbesondere 300°C eingestellt.

Entsprechend weiterer besonderer Ausgestaltungen des erfindungsgemäßen Verfahrens erfolgt der Betrieb des Trockners bei einer, auf den Abfallstoff bezogenen, druckabhängigen Innentemperatur von 40°C bis 350 °C, 300 °C , vorzugsweise bis 400 °C, insbesondere im Bereich von 80°C bis 250 °C, besonders bevorzugt in einem Bereich von 120°C bis 200 °C (Angaben bei 1 atm), oder entsprechenden Temperaturen bei anderen Druckverhältnissen.

Es ist jedoch durchaus möglich, entsprechend der Zusammensetzung des zu behandelnden Abfallstoffes eine Behandlung bei, auf das Einsatzgut bezogenen, druckabhängigen Temperaturen bis 130 - 250 °C, besonders bevorzugt bei Temperaturen von 140 - 180 °C (bei einem Druck von 1 atm), durchzuführen.

Dabei ist nicht auszuschließen, dass kurzzeitig, insbesondere lokal, eine Erwärmung des Einsatzgutes über die Verfahrenstemperatur erfolgt.

Nach einer besonderen Ausrührungform der Erfindung erfolgt die indirekte Wärmezufuhr über die Gefäßwand und/oder über beheizte bewegliche Teile und/oder mittels Strahlung, wie beispielsweise über Mikrowellen.

Da nach einer Ausfuhrungsform des erfmdungsgemäßen Verfahrens kein Heizgas in das Trockengefäß, insbesondere in die Behandlungskammer des Trockengefäßes, eingebracht wird, und das Volumen der abzusaugenden Gase sehr klein ist, wird der Aufwand für die notwendige Behandlung des abgesaugten Gases minimiert.

Vorteilhaft ist auch die durch die indirekte Beheizung nach einer weiteren Ausführungsform mögliche unabhängige Regelung der Heizleistung und der Zusammensetzung der Gasatmosphäre im Trockner.

Nach einer weiteren besonderen Ausführungsform des erfindungsgemäßen Verfahrens wird Sauerstoff, insbesondere eine Sauerstoff-Inertgasmischung oder mit Sauerstoff angereicherte Luft, und/oder festes und/oder flüssiges und/oder gasförmiges Peroxid/Hyperoxid, vorzugsweise Wasserstoffperoxid, und/oder Ozon und/oder ein Katalysator als chemisches Hilfsmittel zur Zersetzung der Kohlenwasserstoffe, beispielsweise mittels selektiver Oxidation, eingesetzt.

Es können aber auch andere, insbesondere Sauerstoff enthaltende, Gasmischungen oder Stoffe eingesetzt werden.

Der Sauerstoff wird nach verschiedenen Ausführungsformen der Erfindung beispielsweise als technischer Sauerstoff oder als Bestandteil eines Gasgemisches, insbesondere in Form von Luft, bereit gestellt, und/oder gezielt zugeführt. Daneben ist es denkbar den Sauerstoff durch adund/oder absorbierende Feststoffe, in flüssiger Form, oder in Form einer sauerstoff-freisetzenden chemischen Verbindung bereitzustellen. Vorzugsweise handelt es sich bei der Zufuhr des Sauerstoffträgers, insbesondere des technischen Sauerstoffes, zur Durchführung der Behandlung des Abfallstoffes in den Trockner, um eine geregelte Zufuhr.

Nach einer weiteren Ausführungsform der Erfindung werden als chemische Hilfsmittel, ausschließlich oder zusätzlich, Peroxide/Hyperoxide in gasförmiger und/oder flüssiger und/oder fester Form, vorzugsweise Wasserstoffperoxid, und/oder Ozon eingesetzt.

Nach einer bevorzugten Ausführungsform des effindungsgemäßen Verfahrens unterstützt die Verflüchtigung der in den Abfallstoffen enthaltenen Feuchtigkeit die Verflüchtigung der (wasserdampfflüchtigen) Kohlenwasserstoffe. Insbesondere durch die Zugabe von sauerstoffhältigen Oxidationsmitteln entstehen in den Kohlenwasserstoffmoiekülen Sauerstoff enthaltende Gruppen, wodurch die wasserabweisenden (hydrophoben) Eigenschaften der Kohlenwasserstoffe verringert werden. Dies wirkt sich vorteilhaft auf die Wasserdampfflüchtigkeit der Kohlenwasserstoffe aus, so dass eine weitere Beschleunigung der Verflüchtigung der Kohlenwasserstorfe erreicht werden kann.

Nach einer weiteren besonderen Ausführungsform des erfindungsgemäßen Verfahrens führt die Anwendung von Katalysatoren zu einer Beschleunigung der Abbaureaktionen an den Kohlenwasserstoffen. Dabei kann der Katalysator je nach Zusammensetzung als Feinmaterial eingebracht werden und vorzugsweise anschließend in dem entölten Material verbleiben oder in Form von größeren Stücken in das Gefäß eingebracht werden, wobei die Stücke beispielsweise anschließend vom entölten Material abgetrennt und wieder eingesetzt werden. Vor dem Wiedereinsatz ist dabei je nach Katalysatortyp auch eine Behandlung zur Steigerung der Aktivität des Katalysators möglich.

Nach einer weiteren Ausführungsform des erfindungsgemäßen Verfahrens entsteht durch die Zerlegung der Kohlenwasserstoffe, beispielsweise durch eine exotherme Oxidation, zusätzliche Wärme, die direkt an dem Abfallstoff wirksam wird, und somit den Abfallstoff von innen heraus erwärmt. Damit kann die Er- und Durchwärmung des Einsatzgutes verbessert und eine Beschleunigung des Verfahrens herbeigeführt werden.

Die Zugabe eines Oxidationsmittels führt dabei beispielsweise zu einem, insbesondere oxidativen, zumindest teilweisen Abbau der Kohlenwasserstoffe, der wiederum zu einer Absenkung der Verflüchtigungsstemperatur und daher zu einer rascheren Verflüchtigung der Kohlenwasserstoffe führt.

Dadurch, dass nach einem zusätzlichen Merkmal der Erfindung die Erwärmung des Abfallstoffes, insbesondere des Feststoffes und/oder Schlammes, zum Austreiben der restlichen flüchtigen Komponenten, zumindest teilweise in einer Atmosphäre mit einem Sauerstoffanteil, vorzugsweise bezogen auf trockene Luft, von größer als 20,8 Vol% Sauerstoff, bevorzugt mit einem Sauerstoffanteil, vorzugsweise bezogen auf trockene Luft, von 25 bis 50 Vol% Sauerstoff, erfolgt, wird der Abfallstoff gegenüber dem Stand der Technik erheblich schneller von einem Großteil der enthaltenen Kohlenwasserstoffen befreit. Der Sauerstoff wirkt gezielt auf die im Abfallstoff enthaltenen Kohlenwasserstoffe, und führt so zu einer Absenkung der Reaktionstemperatur und zu einem rascheren Abdampfen der Kohlenwasserstoffe.

Nach weiteren bevorzugten Ausführungsformen der Erfindung wird die Behandlung in einer Atmosphäre mit einem Sauerstoffanteil, vorzugsweise bezogen auf trockene Luft, von größer als 22 oder 27 Vol% Sauerstoff durchgeführt. Bei einer entsprechenden Betriebsweise hat sich das vorgestellte Verfahren als besonders wirtschaftlich erwiesen.

Enthält der Abfallstoff auch leichtoxidierbare Stoffe, wie beispielsweise metallisches Magnesium, kann es in Abhängigkeit der Korngröße erforderlich werden, einen Sauerstoffgehalt unterhalb von 20,8% einzustellen, um die Oxidationskinetik einzuschränken. Vorteilhaft wird in diesem Fall Strahlung zur Unterstützung des Kohlenwasserstoffabbaues eingesetzt.

Nach einer besonders bevorzugten Ausführungsform des erfindungsgemäßen Verfahrens wird zur Zersetzung der Kohlenwasserstoffe als strahlungstechnisches Hilfsmittel hochenergetische Strahlung, insbesondere in Form von UV-Strahlung, in den Trockner eingebracht. Hiermit kann eine Beschleunigung der Abbaureaktion der Kohlenwasserstoffe erreicht werden.

Nach einer besonders bevorzugten Ausführungsform des erfindungsgemäßen Verfahrens ensteht durch die Zerlegung der Kohlenwasserstoffe, beispielsweise das Spalten der chemischen Bindung mittels hochenergetischer Strahlung, zusätzliche Wärme, die direkt an dem Abfallstoff wirksam wird, und somit den Abfallstoff von innen heraus erwärmt. Somit kann die Er- und Durchwännung des Einsatzgutes verbessert und eine Beschleunigung des Behandlungsverfahrens herbeigeführt werden.

Nach einem zusätzlichen Merkmal des erfindungsgemäßen Verfahren wird der Abfallstoff vor der Behandlung mechanisch entwässert und/oder chemisch und/oder thermisch vorgetrocknet.

Durch die Entwässerung bzw. Vortrocknung wird bereits ein großer Anteil des Wassers aus den Abfallstoffen, insbesondere den Walzzunderschlämmen, entfernt, wodurch sich die Durchlauf- bzw. Behandlungszeiten zur Entfernung der Kohlenwasserstoffe deutlich verringern.

Nach einer weiteren Ausführungsform der Erfindung kann zumindest ein Teil des H₂O-Gehaltes des Abfallstoffes durch Zugabe von Branntkalk abgebunden werden, wobei die Menge des zugegebenen Branntkalkes vorzugsweise dem stöchiometrischen Verhältnis der Kalklöschreaktion entspricht oder dieses unterschreitet.

Durch die Reaktion des Branntkalkes entsteht Wärme, wodurch die Aufheizung des Abfallstoffes wesentlich beschleunigt wird. Weiters erweist sich die Zugabe des Kalkes für die weitere Verarbeitung des Abfallstoffes beispielsweise in einer Sinteranlage oder in einem Agglomerationsverfahren als besonders vorteilhaft. Insbesondere bei der Agglomeration (bsp. Granulierung, Brikettierung) kann auf diese Weise zumindest teilweise auf den Einsatz eines zusätzlichen Bindemittels verzichtet werden. Eine Agglomeration ohne zusätzliche Bindemittel ist erfahrungsgemäß bei einer Zugabe von mehr als 5 Gew% CaO möglich. Schließlich kann, wie dem Fachmann aus dem Stand der Technik bereits bekannt ist, eine Aushärtung der Agglomerate mit CO₂ (Kalksteinbildung) erfolgen.

Nach verschiedenen Ausführungsformen der Erfindung ist es möglich die Vortrocknung und/oder die Behandlung sowohl bei Normaldruck (1 atm), als auch bei Über- oder Unterdruck zu betreiben.

Nach einer besonderen Ausführungsform der Erfindung erfolgt bei der thermischen Vortrocknung eine, insbesondere indirekte, Beheizung des Trockners, worauf bei einer, insbesondere auf den Feststoff und/oder Schlamm bezogenen, druckabhängigen Innentemperatur beispielsweise von 40 bis 200 °C, insbesondere 90 bis 110 °C, besonders bevorzugt bei etwa 105 °C (bei 1 atm), ein Abdampfen der, im Feststoff und/oder Schlamm enthaltenen, leichtflüchtigen Komponenten, insbesondere des Wassers, erfolgt. Sind die leichtflüchtigen Komponenten abgedampft, wird beispielsweise bei der nachfolgenden Behandlung des Abfallstoffes eine weitere Erwärmung herbeigeführt, wobei flüchtige Kohlenwasserstoffe den Feststoff und/oder Schlamm verlassen und abdampfen. Im Zuge der erfindungsgernäßen Behandlung erfolgt durch ein Hilfsmittel zur Zerlegung der Kohlenwasserstoffe eine wesentliche Beschleunigung des Reinigungsprozesses. Dabei wird beispielsweise durch Sauerstoff, welcher insbesondere ab 140 °C diesen Vorgang wesentlich beschleunigt, eine zumindest teilweise exotherme Oxidation und/oder Spaltung der Kohlenwasserstoffe, beispielsweise zu Kohlenmonoxid und/oder Kohlendioxid, und gegebenenfalls ein exothermes, teilweises Aufoxidieren des Feststoffes und/oder Schlammes, beispielsweise des Eisenoxides eines Walzzunderschlammes von Wüstit zu Haematit undloder zu Magnetit, bewirkt. Mit dieser Oxidation geht eine Beschleunigung der Erwärmung sowie gegebenenfalls der Crackvorgänge, einher, wobei vermehrt kurzkettige Kohlenwasserstoffe entstehen. Zumindest ein Teil des Sauerstoffes der Atmosphäre in dem Trocknungsgefäß wird in Folge der genannten Reaktionen verbraucht.

Im Gegensatz zum Stand der Technik befindet sich im Abgas des vorliegenden erfindungsgemäßen Verfahrens ein großer Anteil an kurzkettigen Kohlenwasserstoffen, wodurch sich die weitere Abgasbehandlung wesentlich vereinfacht. Eine Adaptierung der, aus dem Stand der Technik bekannten, Abgasbehandlung ist aus diesem Grund angebracht.

Gegenüber dem Stand der Technik kann eine verkürzte Behandlungszeit des Abfallstoffes, eine niedrigere Verfahrenstemperatur, sowie ein wirtschaftlicherer Betrieb einer derartigen Vorrichtung und eines derartigen Verfahrens verwirklicht werden.

Nach einem weiteren Merkmal der Erfindung werden die Schlämme vor der thermischen Vortrocknung und/oder der weiteren Behandlung der Abfallstoffe mechanisch getrocknet, insbesondere entwässert.

Nach einem weiteren zusätzlichen Merkmal des erfindungsgemäßen Verfahren wird in dem Trockner die Temperatur des Abfallstoffes und/oder die Zusammensetzung der, insbesondere abgesaugten, Abgase gemessen. Nach einem weiteren Merkmal des erfindungsgemäßen Verfahrens wird, vorzugsweise aufgrund der ermittelten Messgrößen, eine Steuerung und/oder Regelung der Prozessparameter der Behandlung im Trockner, beispielsweise der Bewegungsintensität im Trockner und/oder der Heizleistung im Trockner und/oder der Temperatur des Abfallstoffes im Trockner und/oder des quantitativen Einsatzes der chemischen und/oder strahlungstechnischen Hilfsmittels zum Abbau der Kohlenwasserstoffe, durchgeführt.

Nach einer Auführungsform des erfindungsgemäßen Verfahrens wird die Sauerstoffkonzentration und/oder die Sauerstoffmenge in der Behandlungkammer gezielt geregelt oder gesteuert. Damit kann auf vorteilhafte Weise die Art und Zusammensetzung des Einsatzmateriales berücksichtigt werden. Je nach Art und Zusammensetzung des Abfallstoffes, sowie beispielsweise in Abhängigkeit des Reaktionsfortschrittes, ist eine vorbestimmte Sauerstoffkonzentration und/oder Sauerstoffmenge in der Atmosphäre der Behandlungskammer einzustellen. Auf diese Weise kann das erfindungsgemäße Verfahren besonders wirtschaftlich betrieben werden.

Nach einem weiteren Merkmal der Erfindung wird bei der Behandlung die Temperatur des Feststoffes und/oder Schlammes gezielt geregelt. Dabei erfolgt die Regelung beispielsweise mit Rücksicht auf das Sauerstoffangebot der Atmosphäre im Trockner, und/oder die Bestrahlungsintensität des Abfallstoffes, und/oder auf die Zusammensetzung des zu behandelnden Festkörpers und/oder Schlammes, und/oder auf den Reaktionsfortschritt des Austreibens der Kohlenwasserstoffe.

Zur effizienten Steuerung des Verfahrens ist es vorteilhaft die Temperatur im Gefäß, vorzugsweise die Temperatur des Abfallstoffes, und/oder die Temperatur und/oder die Zusammensetzung der abgesaugten Gase (eine oder mehrere aus: Kohlenmonoxidgehalt, Kohlendioxidgehalt, Wasserstoffgehalt, Sauerstoffgehalt, Kohlenwasserstoffgehalt) zu messen. Die ermittelten Messgrößen unterstützen beispielsweise die Steuerung und/oder Regelung der Prozessparameter, insbesondere der Heizenergiezufuhr und/oder der Oxidationsmittelzufuhr und/oder der Bewegungsintensität, die im Laufe des Prozesses geeignet verändert werden können.

Durch die Auswertung der Messgrößen sind Rückschlüsse auf den Reaktionsfortschritt des Verfahrens möglich. Somit kann ein Produkt hergestellt werden, dass eine, insbesondere gleichbleibende, Zusammensetzung aufweist, und den hohen Qualitätsnormen der Eisen- und Stahlindustrie entspricht. Insbesondere bei der Verwertung des Endproduktes des erfindungsgemäßen Verfahrens in einer Sinteranlage und/oder in einem Hochofen darf das Endprodukt nur einen limitierten Gehalt an Kohlenwasserstoffen aufweisen. Auch bei der Rezyklierung eines kontaminierten Erdreiches sind strenge Vorgaben betreffend den maximalen Gehalt an Kohlenwasserstoffen einzuhalten.

Nach einer besonderen Ausführungsform des erfindungsgemäßen Verfahren wird eine Regelgröße bestimmt, indem beispielsweise ein Vergleich des Kohlenwasserstoffgehaltes des Abfallstoffes vor und nach der Behandlung in dem Trocknungsgefäß, und/oder eine Analyse der Zusammensetzung der Abgase des Trockners, erfolgt, und beispielsweise unter Berücksichtigung der Temperatur und/oder der Bewegungsintensität des Einsatzmateriales im Trockner der quantitative Einsatz des chemischen und/oder strahlungstechnischen Hilfsmittels zum Abbau der Kohlenwasserstoffe geregelt wird.

Nach einer besonderen Ausführungsform des Erfindungsgegenstandes wird der Wasserstorfgehalt im Trockner oder in einer Leitung am Trockner gemessen. Damit kann eine hohe Betriebssicherheit sichergestellt werden. Sollte beispielsweise eine gefährliche Konzentration an H₂ detektiert werden, wird die O₂-Zufuhr in den Trockner gestoppt oder gedrosselt und gegebenenfalls mit Inertgas, insbesondere N₂, gespült.

Die Temperaturmessung am Trockner erfolgt vorzugsweise mit Thermoelementen, die beispielsweise in einem Schutzmantelrohr in den Arbeitsbereich des Trockners geführt werden.

Die Berücksichtigung weiterer Regel- und Steuergrößen, wie beispielsweise die Einstellung der Behandlungszeit des Abfallstoffes im Trockner, vorzugsweise in Abhängigkeit von der erreichten Produkttemperatur, wie es sich insbesondere im Falle einer quasikontinuierlichen Ausgestaltung des Verfahrens als günstig erweist, sind Gegenstand weiterer bevorzugter Ausführungsformen der Erfindung.

Nach einer besonderen Ausführung des erfindungsgemäßen Verfahrens werden die abgeleiteten, insbesondere abgesaugten, Gase zur Entstaubung, vorzugsweise über beheizte Leitungen, in eine, vorzugsweise wärmeisolierte und/oder indirekt beheizte, Entstaubungseinrichtung, insbesondere einen Heißgaszyklon, geleitet.

Für die Behandlung der abgeleiteten Gase stehen dem Fachmann je nach Art der Kohlenwasserstoffe verschiedene Abgasreinigungsverfahren zur Auswahl. Vorteilhaft ist es jedoch, die abgesaugten Gase in eine, vorzugsweise wärmeisolierte und/oder indirekt beheizte, Entstaubungsvorrichtung zu leiten, um, aus dem Behandlungsgefäß mitgerissene, Staubpartikel abzuscheiden.

Bevorzugt wird die Entstaubungsvorrichtung dabei bei einer Temperatur, die zumindest der Temperatur im Trockner entspricht, betrieben. Hiermit wird ein Niederschlag der flüchtigen Komponenten, insbesondere der, vorzugsweise höhersiedenden, Kohlenwasserstoffe, auf kalten Flächen verhindert.

Nach einer bevorzugten Ausführungsform der Erfindung ist die Temperatur der in Entstaubungsvorrichtung dabei zumindest so hoch wie die Verfahrenstemperatur für den Austrieb der flüchtigen Komponenten, insbesondere der Kohlenwasserstoffe, im Trockner, und/oder bei der Vortrocknung des Abfallstoffes eingestellt.

Nach einer weiteren Ausführung des erfindungsgemäßen Verfahren werden die, vorzugsweise vorentstaubten, Abgase der Behandlung und/oder Vortrocknung des Abfallstoffes in einem Kühler, vorzugsweise einem Kondensator, gekühlt, insbesondere entspannt, und/oder teilweise von Verunreinigungen befreit, und gegebenenfalls anschließend in einem Aktivkohlefilter und/oder Biofilter gefiltert.

Nach einer weiteren Ausführung des erfindungsgemäßen Verfahren werden die, vorzugsweise vorentstaubten, Abgase thermisch und/oder katalytisch verbrannt, und auf diese Weise gegebenenfalls von Reststoffen, insbesondere von Rest-Kohlenwasserstoffen, wie sie beispielsweise in einem Kondensator nicht abgeschieden werden können, befreit.

Der, insbesondere vollständige, Abbau der Kohlenwasserstoffe des Abgases erfolgt bevorzugt durch katalytische und/oder thermische Verbrennung in einer entsprechenden Einrichtung. Vorteilhafterweise wird die Energie dieser Verbrennung, etwa zur Aufhetzung des Heizmediums, welches zur Beheizung des Trocknungsgefäßes benötigt wird, genutzt.

Nach einer besonderen Ausführung des erfindungsgemäßen Verfahren wird die Energie aus der thermischen und/oder katalytischen Verbrennung zur Beheizung des Trockners, beispielsweise zur Aufheizung eines Thermoöls, und/oder weiterer Vorrichtungen zur Durchführung des Verfahrens verwendet.

Nach einem weiteren zusätzlichen Merkmal wird das, vorzugsweise vorentstaubte, Abgas in einer Verbrennungseinrichtung, beispielsweise in einem Stoßofen zur Erwärmung von Brammen, verbrannt. Damit kann eventuell auf das Anbringen eines Kondensators bzw. auf die Kondensation der Kohlenwasserstoffe verzichtet werden.

Die Entstaubung des Abgases kann nach einer weiteren Ausführungsform der Erfindung vor oder nach der thermischen oder katalytischen Verbrennung erfolgen.

Nach einer weiteren Ausführungsform der Erfindung wird eine Anzahl von Leitungen, insbesondere Rohre, welche zur Aufnahme und Transport des Abgases der Vortrocknung und/oder der Behandlung, beispielsweise in die Entstaubungsvorrichtung und/oder, gegebenenfalls aus der Entstaubungsvorrichtung, in den Kondensator, dient, vorzugsweise indirekt, zusätzlich zur Erwärmung durch die Abgase selbst, beheizt Damit wird ein Niederschlag von flüchtigen Stoffen, insbesondere höhersiedenden Kohlenwasserstoffen, verhindert. Die eingestellte Temperatur ist dabei vorzugsweise mindestens so hoch wie die Verfahrenstemperatur des jeweiligen Verfahrensschrittes.

Die Erfindung erweist sich bei der Behandlung von zunderhältigen Schlämmen, insbesondere Walzzunderschlämmen und Schleifschlärnmen, als besonders vorteilhaft, und ist diesbezüglich am detailliertesten dokumentiert. Die Ausführungen zu diesem speziellen Medium haben jedoch nur beispielhaften Charakter, und schränken die Anwendung des Erfindungsgegenstandes in keiner Weise, auf die Behandlung von Schlämmen allgemein, oder Walzzunderschlämmen im speziellen, ein.

Das erfindungsgemäße Verfahren und die erFndungsgemäße Vorrichtung kann auch zur Behandlung anderer kohlenwasserstoffhältiger, insbesondere Feststoffteilchen aufweisender, Abfallstoffe, vorzugsweise der metallverarbeitenden Industrie, angewendet werden, wie sie beispielsweise bei der Herstellung oder Bearbeitung von Eisen, Aluminium, Titan, Kupfer und/oder anderen metallischen Werkstoffen anfallen. Weiters können auch kohlenwasserstoffhältige Feststoffe und/oder Schlämme, beispielsweise aus der nichtmetallverarbeitenden Industrie, insbesondere Schleifschlämme, gemäß dem erfindungsgernäßen Verfahren behandelt werden.

Besonders vorteilhaft gestaltet sich das vorgestellte Verfahren beispielsweise zur Aufarbeitung Kohlenwasserstoff und metallhaltiger Stoffe, insbesondere von Schlämmen.

Das erfindungsgemäße Verfahren sowie die erfindungsgemäße Vorrichtung eignet sich weiters zur Reinigung von ölkontaminierten Böden, beispielsweise zur Herstellung von Baustoffen.

Durch die erfindungsgemäße Abtrennung der Kohlenwasserstorfe aus dem Abfallstoff, beispielsweise aus dem Walzzunderschlamm, kann das Endprodukt des Verfahrens in Sinteranlagen oder anderen Einrichtungen, für welche ein niedriger Gehalt an Kohlenwasserstoffen nötig ist, eingesetzt werden.

Gegebenenfalls erfolgt bei Einsatz eines Oxidationsmittels als chemischem Hilfsmittel zur Zerlegung der Kohlenwasserstoffe eine teilweise Aufoxidation der in dem Abfallstoff enthaltenen metallischen Komponenten, wobei durch die, begrenzt stattfindende, exotherme Oxidation die Temperatur im Innenraum des Trockners rasch und ohne zusätzliche Beheizung ansteigt und auf diese Weise erhebliche Heizkosten und Behandlungszeit eingespart werden. Nicht zuletzt kann, wie bereits erwähnt, auch die Oxidation der Kohlenwasserstoffe zur weiteren Erwärmung des Walzzunderschlammes beitragen.

Nach einer bevorzugten Ausführungsform ist bei Einsatz eines Oxidationsmittels als chemischem Hilfsmittel zur Zersetzung der Kohlenwasserstoffe, vorzugsweise ab einer, vom jeweiligen Einsatzgut abhängigen, Temperatur - bei Walzzunderschlämmen liegt diese bei etwa 180 - 200 °C (1 atm) - die Umsetzung der Kohlenwasserstoffe im wesentlichen abgeschlossen, worauf, durch den Ablauf exothermer Reaktionen, beispielsweise der Oxidation von Wüstit zu Haematit und/oder zu Magnetit, ein starker Temperaturanstieg, erfolgen kann.

Enthält der Abfallstoff beispielsweise neben den Kohlenwasserstoffen weitere mit dem Oxidationsmittel in exothermer Weise reagierende Stoffe, vorzugsweise Wüstit oder andere metallische Komponenten, erweist es sich, insbesondere zur gezielten Begrenzung der Temperatur des Einsatzgutes, als vorteilhaft, vorzugsweise über die Regelung der Oxidationsmittelzufuhr hinaus, eine regelbare Zufuhr von Inertgasen vorzusehen. Durch eine solche Verfahrensweise kann die Regelung der Temperatur wie auch der Oxidation des Abfallstoffes in der Behandlungskammer wesentlich beschleunigt werden. Nach einer bevorzugten Ausführungsform des erfmdungsgemäBen Verfahrens ist deshalb eine regelbare Zufuhr von Inertgasträgern in das Trocknungsgefäß vorgesehen.

Durch Zuleiten von Inertgasträgern, wie beispielsweise durch Einleiten von Stickstoff, in den Trockner, kann also das Angebot an Sauerstoff begrenzt, und damit die Temperatur rasch und verläßlich eingestellt werden. Nach einer weiteren Variante kann, um eine, insbesondere übermäßige, Erwärmung des Abfallstoffes zu verhindern, die Zufuhr des Hilfsmittels zur Zerlegung der Kohlenwasserstoffe, insbesondere des Sauerstoffs, abgestellt oder gedrosselt werden.

Die mögliche Aufoxidation, beispielsweise des Wüstits zu Haematit und/oder zu Magnetit, im zweiten Verfahrensschritt des erfindungsgemäßen Verfahrens ist grundsätzlich nicht beabsichtigt, da insbesondere bei einem Einsatz des behandelten Materials in einem Reduktionsaggregat der Eisen- und Stahlindustrie die erfolgte teilweise Aufoxidation wiederum zusätzliche Reduktionsarbeit erfordern würde. Allerdings erfolgt die Aufoxidation des Wüstits in einer stark exothermen Reaktion, wodurch die Temperatur im Innenraum des Trockers rasch und ohne zusätzliche Beheizung ansteigt, und erhebliche Heizkosten eingespart werden können.

Bei einer Behandlung eines Walzzunderschlammes ist beispielsweise ab einer Temperatur von 180 - 200 °C die Umsetzung der flüssigen Phasen des Abfallstoffes im Trockner, im wesentlichen, abgeschlossen, worauf, durch den Ablauf exothermer Reaktionen, insbesondere der Oxidation des Wüstits zu Haematit und/oder zu Magnetit, ein starker Temperaturanstieg, erfolgen kann.

Durch die teilweise Aufoxidation des im Walzzunderschlamm enthaltenen Metalles, insbesondere des Eisens, stellt sich bei Zugabe des Endproduktes in ein metallurgisches Aggregat, beispielsweise in einen Elektroofen, eine kühlende Wirkung ein. So kann einerseits in der Walzzunderschlamm-Behandlung die Wärme der exothermen Oxidation des Eisens, und andererseits an anderer Stelle die kühlende Wirkung des aufbereiteten und aufoxidierten Endproduktes vorteilhaft genutzt werden.

Nach einer vorteilhaften Ausgestaltung der Erf'mdung kann durch eine Regelung der indirekten Beheizung, beispielsweise auch im Sinne einer Kühlung des Heizmediums (Kühlmediums), der Prozess, insbesondere die Temperatur des Abfallstoffes in der Behandlungskammer gesteuert werden.

Nach weiteren Ausführungsformen der Erfindung erfüllt der erfindungsgemäße Trockner auch die Funktion eines Mischers und/oder Granulators.

Die Parameter des erfindungsgemäßen Verfahrens, insbesondere zur Behandlung des kohlenwasserstoffhältigen Abfallstoffes, können grundsätzlich unabhängig voneinander gewählt werden. Zweckmäßig ist jedoch beispielsweise eine Anpassung der Verfahrensparameter des, insbesondere thermischen. Vortrocknens und/oder der weiteren Behandlung des Abfallstoffes, insbesondere die Abstimmung der Verfahrenstemperaturen und/oder Verweilzeiten des Abfallstoffes bei der Vortrocknung und der nachfolgenden Behandlung.

Das erfindungsgemäße Verfahren wird vorzugsweise kontinuierlich oder als Batch-Verfahren betrieben.

Nach einem weiteren zusätzlichen Merkmal der Erfindung erfolgt die Vortrocknung und/oder Behandlung des Abfallstoffes im wesentlichen quasikontinuierlich.

Anlagen und Verfahren dieser Art, soweit dem Fachmann aus dem Stand der Technik bekannt, sind durch einen diskontinuierlichen bzw. batch-Betrieb gekennzeichnet. Gegenüber dieser Betriebsweise zeichnet sich ein quasikontinuierlicher oder kontinuierlicher Prozess durch eine gesteigerte Wirtschaftlichkeit aus, wobei gegebenenfalls eine zumindest teilweise Rezyklierung der Abgase verwirklicht werden kann.

Bei einer quasikontinuierlichen Betriebsweise wird ein, gegenüber dem gesamten im Trockner befindlichen Material, kleiner Teil des behandelten Materials aus dem Trockner ausgebracht, während unbehandeltes Material in den Trockner eingebracht wird. Im Unterschied zur kontinuierlichen Betriebsweise erfolgt dieser Austausch nicht zwingend kontinuierlich und/oder zeitlich überlappend. Nach einer bevorzugten Ausführungsform kann die Einbringung des Feststoffes und/oder Schlammes in den Trockner über einen Zwischenbunker mit einer entsprechenden Dosiereinrichtung erfolgen.

Gegenüber einer kontinuierlichen Betriebsweise zeichnet sich der quasikontinuierliche Betrieb durch seine hohe Prozess- und Betriebssicherheit aus.

Nach einem zusätzlichen Merkmal der Erfindung, werden die Abgase, die bevorzugt im wesentlichen aus CO, CO₂, O_{2,} sowie gasförmigen Kohlenwasserstoffen bestehen, aus dem Reaktionsraum abgezogen, und einer Abgasbehandlung, insbesondere einer zumindest teilweisen Rezyklierung, unterworfen.

Nach einer besonders bevorzugten Ausführungsform der Erfindung wird die, insbesondere thermische, Vortrocknung und die weitere Behandlung des Abfallstoffes in einem einzigen Trockner durchgeführt, wobei auf diese Weise die Einrichtung eines weiteren Trockners entfällt, und so erhebliche Investitions- und Betriebskosten entfallen. Ein derartiger Trockner wird dabei vorzugsweise diskontinuierlich, also chargenweise betrieben.

Nach einem weiteren zusätzlichen Merkmal des erfindungsgemäßen Verfahrens wird die Vortrocknung in einem ersten Trockner und die weitere Behandlung in einem zweiten Trockner durchgeführt. Damit wird eine besonders zuverlässige und sichere Betriebsweise des erfindungsgemäßen Verfahrens ermöglicht

Es ist in diesem Fall bevorzugt ein Batch-Betrieb oder ein quasikontinuierlicher Betrieb, der Behandlung des Abfallstoffes und/oder der Vortrocknung und/oder beider Verfahrensschritte, möglich. Auch an eine kontinuierliche Ausgestaltung des Verfahrens kann gedacht werden.

Nach einer weiteren bevorzugten Ausführungsform der Erfindung werden die, der thermischen und/oder chemischen Vortrocknung, und/oder der mechanischen Trocknung, zu unterwerfenden, Schlämme der letzten Stufe eines mehrstufigen Sedimentations- und Filtrationsprozesses entnommen.

Diese Schlämme stellen nach dem Stand der Technik ein erhebliches Entsorgungsproblem dar, da sie einen besonders hohen Gehalt an Kohlenwasserstoffen aufweisen. Mit dem erfindungsgemäßen Verfahren gelingt auch eine Weiterverwertung dieser Schlämme.

Nach einem weiteren zusätzlichen Merkmal des erfindungsgemäßen Verfahrens wird das Abgas der Vortrocknung und/oder der weiteren Behandlung des Abfallstoffes in eine Entstaubungsvorrichtung geleitet.

Nach dem erfindungsgemäßen Verfahren wird aus einem kohlenwasserstoffhältigen, gegebenenfalls oxidhältigen, Abfallstoffes, vorzugsweise einem Walzzunderschlamm oder einem Schlamm aus der Wasseraufbereitung einer Stranggußanlage, ein metallurgischer Stoff erzeugt, der einen Kohlenwasserstoffgehalt von weniger als 0,2 Masse%, vorzugsweise weniger als 0,1 Masse%, sowie einen Eisenoxidanteil von zumindest 80 Masse%, vorzugsweise von zumindest 84 Masse%, aufweist.

Nach einem weiteren Merkmal ist dieses Erzeugnis durch einen Gehalt von im wesentlichen 60-80 Masse% Eisen, insbesondere 63-72 Masse% Eisen, und davon in etwa 50-60 Masse% FeO und in etwa 30-40 Masse% Fe₂O₃ gekennzeichnet.

Nach einem weiteren Merkmal des erfindungsgemäßen Verfahrens ist eine zumindest teilweise Zirkulation des Abfallstoffes in der Vortrocknungs- und/oder der Behandlungsstufe möglich. Auf diese Weise kann beispielsweise durch eine Detektion des Kohlenwasserstoffgehalts teilweise behandeltes und/oder vorgetrocknetes Material in die entsprechende Behandlungsstufe zurückgeführt werden.

Die folgenden nicht einschränkenden Prozessdaten aus Versuchen mit Einsatz von O₂ als chemischem Hilfsmittel zur Zerlegung der Kohlenwasserstoffe des Abfallstoffes, insbesondere als Oxidationsmittel, variieren je nach Art des Walzzunders und der verwendeten Walzöle.

### Prozessführung: Batchbetrieb

### Menge Einsatzmaterial: 1 t

### Ölgehalt des Walzzunders vor und nach der Behandlung:

Vor der Behandlung: 1-5 Gew%
Nach der Behandlung: < 0,1 - 0,3 Gew%

### Wassergehalt des Walzzunders vor und nach der Behandlung:

Vor der Behandlung: 10 - 40 Gew%
Nach der Behandlung: < 0,1 Gew%

### Behandlungstemperatur: Start bei RT; Ende bei 250 - 350°C

### Behandlungszeit: 30 - 60 min

### Sauerstoff: 20 - 30 Vol%

### Gefäßgröße: 1,5 m³

### Gefäßtyp: Indirekt beheizter Doppelmantelmischer (beheizt mit Thermoöl)

### Bewegungsintensität: 30-100 Umdrehungen pro Minute

Die Erfindung ist weiters durch eine Vorrichtung zur Durchführung des erfindungsgemäßen Verfahrens gemäß Anspruch 17 gekennzeichnet.

Nach verschiedenen Ausführungsformen der Erfindung ist der Trockner beispielsweise als beheiztes Drehrohr oder beheizter Schneckenförderer oder als beheizter Mischer ausgeführt.

Nach weiteren Ausführungsformen der Erfindung erfüllt der erfindungsgemäße Trockner auch die Funktion eines Mischers und/oder Granulators, beispielsweise in Form eines Mischers mit horizontaler oder vertikaler Welle. In einer anderen Ausführungsform wird das Gefäß als Drehrohr oder Mischschnecke ausgeführt.

Nach einem zusätzlichen Merkmal der erfindungsgemäßen Vorrichtung ist als Einrichtung zur Zerlegung der Kohlenwasserstoffe ein Fördermittel zur Zufuhr von Sauerstoff und/oder Peroxid/Hyperoxid und/oder Ozon in die Behandlungskammer des Trockners vorgesehen.

Nach einer weiteren bevorzugten Ausführungsform ist als Einrichtung zur Zerlegung der Kohlenwasserstoffe eine Strahlungsquelle zur Bestrahlung des Abfallstoffes in der Behandlungskammer des Trockners, insbesondere mit UV-Strahlung, vorgesehen.

Nach einer besonderen Ausführungsform der erfindungsgemäßen Vorrichtung ist es möglich mehrere Einrichtungen, beispielsweise chemische und/oder strahlungstechnische Hilfsmittel, zur Zerlegung von Kohlenwasserstoffe zu kombinieren.

Nach einer weiteren bevorzugten Ausführungsform ist am Trockner eine Leitung zur Zufuhr eines Inertgasträgers, insbesondere eines Inertgases, besonders bevorzugt eines Stickstoffträgers, vorgesehen.

Nach einer weiteren bevorzugten Ausführungsform ist im Trockner eine Einrichtung zur Bewegung des Abfallstoffes vorgesehen und/oder der Behandlungsraum und/oder der Trockner selbst drehbar ausgeführt.

Es hat sich gezeigt, dass die indirekte Erwärmung beispielsweise aufgrund umwelttechnischer Überlegungen gegenüber der direkten Erwärmung des Abfallstoffes verschiedene Vorzüge aufweist. So kann bei der indirekten Erwärmung in besonders vorteilhafter Weise die Abwärme aus einem Hüttenwerk genutzt werden. Nach einer besonders bevorzugten Ausführungsform der Erfindung wird dabei die Wärme aus der Abgasbehandlung, insbesondere des Abgases des vorgestellten Verfahrens, beispielsweise mittels Verbrennung des Abgases, genutzt

Nach einem Merkmal der erf'mdungsgemäßen Vorrichtung umfasst das Fördermittel zur Zufuhr von Sauerstoff ein Mittel zur Zufuhr eines Sauerstoffträgers, insbesondere eine Leitung zur Zufuhr eines gasförmigen und/oder flüssigen Sauerstoffträgers.

Nach einem weiteren Merkmal der erfindungsgemäßen Vorrichtung umfasst das Mittel zur Zufuhr eines Sauerstoffträgers ein Fördermittels, beispielsweise eine Transportschnecke, zum Transport eines festen Sauerstoffträgers.

Nach einer weiteren bevorzugten Ausführungsform ist eine, beispielsweise wärmeisolierte und/oder, vorzugsweise indirekt, beheizbare, Entstaubungseinrichtung zur Entstaubung der aus der Behandlungskammer abgesaugten Gase vorgesehen, die gegebenenfalls über eine Anzahl von wärmeisolierten und/oder zusätzlich beheizbaren Leitungen einerseits mit dem Trockner sowie andererseits gegebenenfalls mit weiteren Einrichtungen zur Behandlung der aus dem Trockner abgeleiteten Gase, verbunden ist. Die Entstaubungsvorrichtung dient dabei im wesentlichen zur Reinigung des heißen Abgases von groben Partikeln und Stäuben.

Die Entstaubungseinrichtung kann beispielsweise als Zyklon, insbesondere als Heißgaszyklon, als Filter, oder als Wäscher ausgeführt sein. Auch an eine Entstaubung mittels eines Elektrofilters, wie dem Fachmann aus dem Stand der Technik bekannt, kann gedacht werden. Nach einer bevorzugten Ausführungsform der erfindungsgemäßen Vorrichtung kann die Entstaubungsvorrichtung unmittelbar an den Trockner anschließen, und vorzugsweise gemeinsam mit dem Trockner beheizbar sein.

Nach einer weiteren bevorzugten Ausführungsform ist nach dem Trockner, gegebenenfalls nach der Entstaubungseinrichtung, ein Kühler, vorzugsweise ein Kondensator, und gegebenenfalls anschließend ein Aktivkohlefilter und/oder Biofilter zur Reinigung der abgeleiteten Gase vorgesehen ist.

Ein Kühler, wie aus dem Stand der Technik bekannt, entspannt das Abgas und/oder kühlt es ab und/oder scheidet höhersiedende Bestandteile des Gases, insbesondere Kohlenwasserstoffe, ab. Zur weiteren Reinigung der Abgase kann nach dem Kühler ein Aktivkohlefilter oder eine Brennkammer angebracht werden.

Nach einem Merkmal der Erfindung ist eine Anzahl wärmeisolierter und/oder, insbesondere indirekt, beheizbarer Leitungen, insbesondere Rohre, welche zur Aufnahme und zum Transport des Abgases aus dem Trockner in weitere Vorrichtungen zur Abgasbehandlung, insbesondere in eine Entstaubungsvorrichtung und/oder gegebenenfalls aus der Entstaubungsvomchtung, in einen Kühler dient, vorgesehen.

Nach einer besonderen Ausführungsform der erfindungsgemäßen Vorrichtung erfolgt das Beheizen der Leitungen, um eine Blockade durch Kohlenwasserstoffe oder andere abgedampfte Stoffe, welche eine besonders hohe Verdampfungstemperatur aufweisen und sich deshalb bevorzugt an kalten Flächen abscheiden, zu verhindern.

Nach einer weiteren bevorzugten Ausrührungsform ist nach dem Trockner, gegebenenfalls nach der Entstaubungsvorrichtung, eine thermische und/oder katalytische Verbrennungseinrichtung zur Behandlung der abgeleiteten Gase vorgesehen.

Nach einer weiteren bevorzugten Ausführungsform ist die Verbrennungseinrichtung zur thermischen und/oder katalytischen Umsetzung des kohlenwasserstoffhältigen Abgases mit der Beheizungseinrichtung des Gefäßes gekoppelt, so dass die, insbesondere bei der Nachverbrennung, freiwerdende Energie genutzt werden kann.

Nach einer besonderen Ausführungsform der erfindungsgemäßen Vorrichtung ist nach dem Trockner, gegebenenfalls nach der Entstaubungsvorrichtung, eine Flammendurchschlagssicherungseinrichtung, insbesondere in Form einer Tauchquenche, vorgesehen.

Nach einem weiteren Merkmal der Erfindung ist nach dem Trockner, gegebenenfalls nach der Entstaubungseinrichtung, besonders bevorzugt nach dem Kühler, zumindest ein Aktivkohlefilter und/oder eine Brennkammer angebracht Durch den Aktivkohlefilter wird das Abgas von auftretenden Rückständen, insbesondere von Kohlenwasserstoffen, befreit

Nach einer anderen Ausführungsform der Erfindung wird das Abgas, gegebenenfalls nach geeigneter Vorbehandlung, in der Brennkammer katalytisch und/oder thermisch verbrannt. In einer nachgeordneten Entstaubungsanlage kann das Abgas aus der Brennkammer von Rückständen gereinigt werden.

Nach einem zusätzlichen Merkmal der Erfindung sind eine oder mehrere Leitungen zur zumindest teilweisen Rückführung des Abgases aus der Vortrocknung und/oder der weiteren Behandlung des Abfallstoffes und/oder aus dem Kühler und/oder aus der Entstaubungseinrichtung und/oder aus dem Aktivkohlefilter und/oder aus einer weiteren Einrichtung der Abgasbehandlung in zumindest einen der Trockner vorgesehen. Damit kann das entstandene Abgas wiederverwertet werden.

Nach einem weiteren Merkmal der Erfindung sind nach dem Trockner, gegebenenfalls nach der Entstaubungsvorrichtung, zwei Kühler angebracht sind, wobei ein erster Kühler, insbesondere ein erster Kondensator, zur Kondensation von leichtflüchtigen Komponenten, insbesondere von Wasserdampf, und ein zweiter Kühler, insbesondere ein zweiter Kondensator, zur Kondensation von schwerflüchtigen Komponenten, insbesondere von Kohlenwasserstoffen, vorgesehen ist. Über eine angebrachte Regelvorrichtung kann dabei beispielsweise bei Verwendung eines einzigen Trockners zur Durchführung sowohl der thermischen Vortrocknung als auch der weiteren Behandlung des Abfallstoffes, das Abgas während des ersten Verfahrensschrittes in einen ersten Kondensator zur Abscheidung des Wassers, und während der weiteren Behandlung in einen zweiten Kondensator zur Abscheidung der Kohlenwasserstoffe eingeleitet werden. Dabei wird über die Regelvorrichtung die Zufuhr des zu kondensierenden Gases in den jeweiligen Kondensator geregelt.

Nach einem weiteren Merkmal der erfindungsgemäßen Vorrichtung sind an dem Mittel zur Zufuhr eines Sauerstoffträgers in den Trockner und/oder an zumindest einer Abgasleitung und/oder am Trockner selbst eine Anzahl von Sonden und/oder Sensoren angebracht, womit das Sauerstoffangebot im Trockner, und/oder die Zusammensetzung des Abgases und/oder der Atmosphäre im Trockner (insbesondere des Kohlenmonoxid-, Kohlendioxid-, Wasserstoff-, Sauerstoff-, und/oder Kohlenwasserstoffgehaltes), und/oder die Temperatur des Abgases und/oder die Temperatur im Trockner bestimmbar ist. Als Abgasleitungen werden dabei definitionsgemäß alle Leitungen zum Ableiten der Abgase des Trockners bezeichnet

Nach einer weiteren besonderen Ausführungsform der erfindungsgemäßen Vorrichtung sind im Trockner freibewegliche Körper, insbesondere Schlagstangen, vorgesehen, die gegebenenfalls auftretende Anbackungen von Abfallstoffen in der Behandlungskammer sowie Agglomeratbildung verringern.

Nach einer weiteren Ausführungsform sind die Einrichtung zur indirekten Beheizung des Trockners und/oder die Einrichtung zur Bewegung des Abfallstoffes in der Behandlungskammer regelbar ausgeführt.

Nach einem Merkmal der erfindungsgemäßen Vorrichtung ist an der Einrichtung zur Einbringung des Hilfnüttels zur Zerlegung der Kohlenwasserstoffe, insbesondere an dem Mittel zur Zufuhr des chem. Hilfsmittels zur Zerlegung der Kohlenwasserstoffe, eine Regeleinrichtung angebracht.

Nach einer bevorzugten Ausführungsform erfolgt die Einbringung des Feststoffes und/oder Schlammes in den Trockner über einen Zwischenbunker mit einer entsprechenden Dosiereinrichtung.

Nachfolgend wird das erfindungsgemäße Verfahren, sowie die erfindungsgemäße Vorrichtung schematisch anhand von nicht einschränkenden Zeichnungen näher erläutert.
Fig. 1 zeigt eine Vorrichtung zur Vorbereitung, insbesondere zur Vortrocknung, eines Abfallstoffes
Fig. 2 zeigt eine nichteinschränkende schematische Ausführungsform einer Vorrichtung zur Behandlung eines, gegebenenfalls vorgetrockneten, Abfallstoffes
Fig. 3 zeigt eine Vorrichtung zur Vortrocknung und weiteren Behandlung eines Abfallstoffes
Fig. 4 zeigt eine nichteinschränkende schematische Ausführungsform einer Vorrichtung zur Durchführung des erFndungsgemäßen Verfahrens.
Fig. 5 zeigt eine Vorrichtung zur Behandlung eines Abfallstoffes mit einer zumindest teilweisen Rückführung des Prozessabgases.

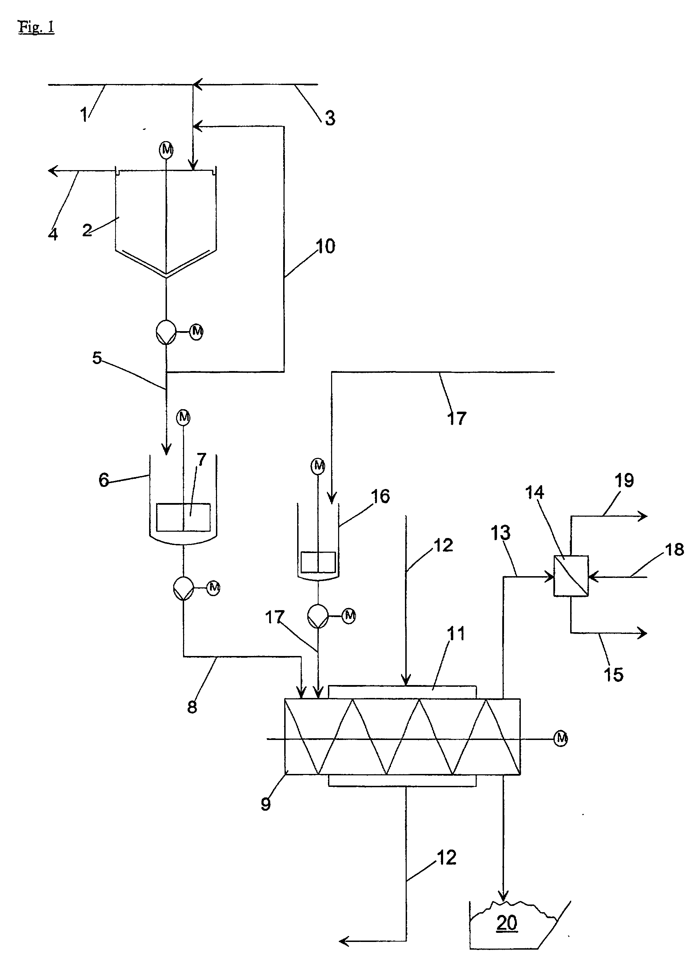

In Fig. 1 ist dabei ersichtlich: Rückspülwässer 1 aus einem Sandfilter werden einem Eindicker 2 zugeführt. Den Rückspülwässem 1 wird eventuell ein Flockungshilfsmittel 3 zugesetzt, um das Absetzen bzw. Abscheiden von in den Rückspülwässem 1 enthaltenen Feststoffen zu fördern. Der zeichnerisch nicht dargestellte Sandfilter stellt die letzte Stufe des mehrstufigen Abscheideund/oder Filtrationsprozesses dar.

Im Eindicker 2 setzt sich Zunderschlamm mit einem hohen Kohlenwasserstoffgehalt ab, Überlaufwasser 4 aus dem Eindicker 2 kann im Kreislauf geführt werden und so beispielsweise wieder als Spülmedium für beladene Sandfilter verwendet werden.

Der Eindicker 2 ist über eine Schlammleitung 5 mit einem Schlammzwischenbehälter 6 verbunden, wobei der Schlammzwischenbehälter 6 mit einer Rührvomchtung 7 versehen ist, um ein weiteres Absetzen des Schlammes zu vermeiden und um den Schlamm pumpbar zu halten.

Der Schlammzwischenbehälter 6 ist über eine weitere Schlammleitung 8 mit einem kombinierten Trockner/Mischer/Granulator 9 verbunden. Der Trockner/Mischer/Granulator 9 ist in einer einfachen Ausführungsform als drehzahlvariabler Pflugschar- oder Paddelmischer ausgeführt und arbeitet bei dem in Fig. 1 dargestellten Ausführungsbeispiel im batch-Betrieb.

Da dem Eindicker 2 Zunderschlamm kontinuierlich zugeführt wird, existieren für den Übergang von kontinuierlich betriebenem Eindicker 2 auf chargenweise betriebenen Trockner/Mischer/Granulator 9 mehrere Ausführungsformen. Es kann - wie in Fig. 1 dargestellt - ein Schlanimzwischenbehälter 6 vorgesehen sein, es kann weiters - wie in Fig. 1 ebenfalls dargestellt - von der Schlammleitung 5 eine Rückführleitung 10 abzweigen, durch welche Schlamm über den Eindicker 2 im Kreislauf geführt wird. Schließlich ist es auch möglich, den Eindicker 2 derart zu dimensionieren, dass dieser unter den gegebenen Betriebsbedingungen jederzeit imstande ist, den Trockner/Mischer/Granulator 9 mit einer Charge Zunderschlamm zu versorgen. Jede dieser drei Ausführungsformen kann für sich alleine oder in Kombination mit einer oder beiden anderen angewendet werden.

Der Trockner/Mischer/Granulator 9 ist mit einem Heizmantel 11 versehen, welcher von einem Heizmedium 12 durchströmt wird. Das Heizmedium 12 kann dabei flüssig oder gasförmig sein, wobei als flüssiges Heizmedium vorzugsweise Wärmeträgeröl zum Einsatz gelangt, aber auch überhitztes, unter Druck stehendes Wasser kann verwendet werden. Als gasförmiges Heizmedium kann beispielsweise eines der in einem Hüttenwerk anfallenden Prozess- bzw. Abgase verwendet werden, also z.B. Abgas aus einem Elektroofen, einem Konverter oder einem Hubbalkenofen oder Topgas aus dem Reduktionsschacht einer COREX-Anlage. Als gasförmiges Heizmedium ist auch Sattdampf, Heißdampf oder technischer Stickstoff verwendbar.

Der Trockner/Mischer/Granulator 9 kann direkt oder indirekt beheizt werden, wobei bei indirekter Beheizung ein Wärmeübertragungssystem vorgesehen ist, mittels welchem Wärme von einem der Prozess- bzw. Abgase auf das Heizmedium 12, welches bei indirekter Beheizung vorzugsweise Wärmeträgeröl, Heißdampf, Sattdampf oder Stickstoff ist, übertragen wird.

Der aus dem Trockner/Mischer/Granulator 9 austretende Wasserdampf 13 wird in einem Kondensator 14 (mit Kühlwasserleitungen 18 und 19) kondensiert und kann als Zusatzwasser 15 für die geschlossenen Kreisläufe einer Wasseraufbereitungsanlage verwendet werden. Eventuell ist dabei vor dem Kondensator die Verwendung einer Entstaubungseinrichtung zur Entstaubung des Abgases aus dem Trockner notwendig.

Der Trockner/Mischer/Granulator 9 ist nach einer möglichen Ausführungsform mit einem Behälter 16 für Bindemittel 17 verbunden, wobei Bindemittel 17 dem Trockner/Mischer/Granulator 9 nach der erfolgten Trocknung einer Charge Zunderschlamm zugegeben wird. Dabei kann auch ein geringer Feuchtegehalt des Bindemittels toleriert werden, da diese Feuchte ebenfalls noch entfernt wird. Der Trockner/Mischer/Granulator 9 wird dann durch Erhöhen der Drehzahl in den Betriebsmodus "Granulieren" geschaltet

Nach einer weiteren Variante kann nach der erfolgten Entölung, entsprechend dem zweiten Verfahrensschritt des erfindungsgemäßen Verfahrens, eine Granulierung durchgeführt werden

Wenn keine Bindemittelzugabe erfolgt, liegt das vorgetrocknete Produkt 20 schließlich in Pulverform mit einer Korngröße von in etwa 1 bis 1000 µm vor, mit Bindemittelzugabe und Granulierung als Granulat mit einer Korngröße von in etwa 1 bis 10mm.

Die Anlage gemäß dem Ausführungsbeispiel aus Fig. 1 ist imstande, Zunderschlamm aus einem Warmwalzwerk - mit einer Kapazität von etwa 3 Mill. jato Breitband - zu verarbeiten.

In einem solchen Warmwalzwerk fallen beispielsweise etwa 420 kg/h Zunder und etwa 12 kg/h Kohlenwasserstoffe in den Sandfiltern - der letzten Stufe des mehrstufigen Sedimentationsund/oder Filtrationsprozesses - an. Die Sandfilter werden mit Wasser rückgespült und dieses mit Zunder und Kohlenwasserstoffen beladene Rückspülwasser einem Eindicker 2 zugeführt. In dem Eindicker 2 wird der kohlenwasserstoffhältige Zunderschlamm soweit entwässert, dass er eine Trockensubstanz von etwa 35% aufweist. Dieser entwässerte Zunderschlamm wird chargenweise in den kombinierten Trockner/Mischer/Granulator 9 überführt, wo er bei etwa 100°C auf eine Restfeuchte < 3% getrocknet wird. Der Trockner/Mischer/Granulator 9 wird dabei mit Sattdampf (5 bar, 1000 kg/h) beheizt Der aus dem Zunderschlamm abgedampfte Wasserdampf 13 wird in einem Kondensator 14 (Kühlwasserbedarf etwa 16 m³/h, 25°C) auskondensiert und das Kondensat (etwa 800 kg/h, 40°C) als Zusatzwasser 15 in einer Wasseraufbereitungsanlage verwendet.

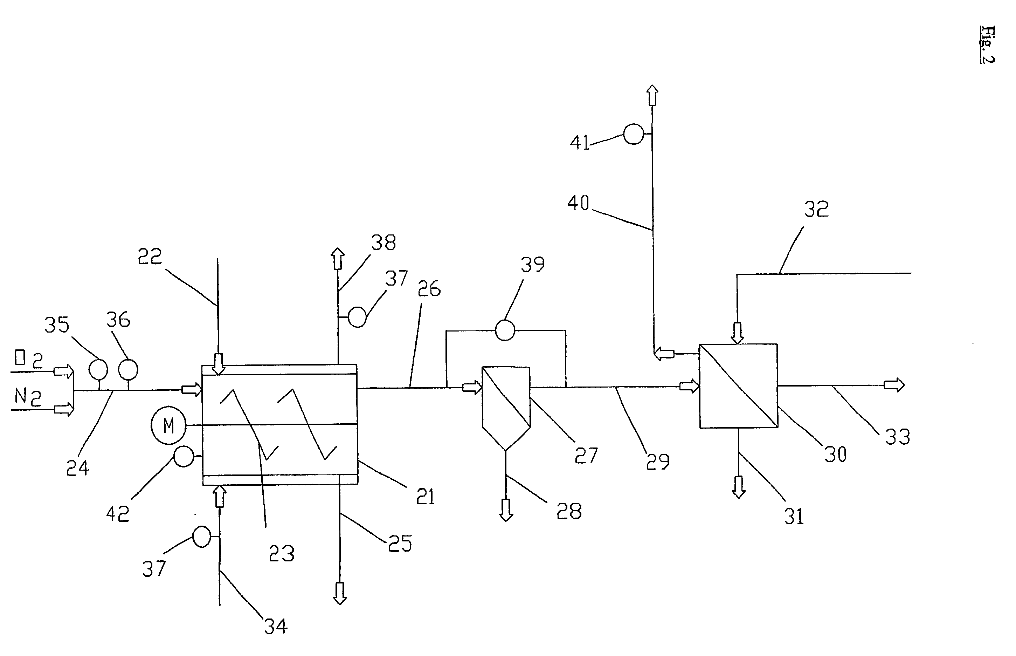

Das fertige Produkt 20 kann danach in geeigneter Art und Weise (siehe Fig. 2) weiter aufbereitet werden.

Nach Fig. 2 ist eine Vorrichtung zur Durchführung des erfindungsgemäßen Verfahrens dargestellt, wobei ein Gefäß 21 über eine Förderleitung 22 mit, vorzugsweise vorgetrocknetem (Fig. 1), Walzzunderschlamm beschickt wird. Der Walzzunderschlamm weist nach dieser Ausführungsform einen niedrigen Wassergehalt, sowie einen hohen Gehalt an Kohlenwasserstoffen auf. Eine solche Vortrocknung ist jedoch keinesfalls zwingend vorgesehen. Das Gefäß 21 ist mit einer Vorrichtung 23 zur Bewegung des, in den Behälter zur Behandlung eingebrachten, Walzzunderschlammes ausgestattet.

Dem Gefäß 21 wird über eine Anzahl von Leitungen 24 ein chemisches Hilfsmittel zum Abbau der Kohlenwasserstoffe, insbesondere Sauerstoff, zugeführt. Neben dem chemischen Hilfsmittel können inerte Gase, vorzugsweise Stickstoff, in den Trockner eingeleitet werden. In Fig. 2 ist ein quasikontinuierlicher Prozess dargestellt, wobei der Walzzunderschlamm durch das Gefäß gefördert, und schließlich durch eine Leitung 25 zur weiteren Verwendung abtransportiert wird. Die im Gefäß entstehenden Abgase werden über eine beheizte Leitung 26 in eine wärmeisolierte und beheizte Gasentstaubungsvorrichtung 27 eingeleitet, wobei das Gas von Staub, der über eine Leitung 28 abgeleitet wird, getrennt wird. Das Gas wird weiter über eine beheizte Leitung 29 in einen Kondensator 30 befördert, in diesem Kondensator entspannt und abgekühlt, und die kondensierte Flüssigkeit über einen Abfluß 31 abgeleitet. Dabei sind eine Anzahl von Kühlleitungen 32, 33 zur Kühlung des Kondensators vorgesehen.

Schließlich gelangt das Gas beispielsweise in einen Aktivkohlefilter und wird von weiteren Verunreinigungen, beispielsweise Rest-Kohlenwasserstoffen, befreit.

Das Gefäß in Fig. 2 wird bevorzugt indirekt beheizt, wobei ein Heizmedium 34 den Mantel des Gefäßes durchströmt. An den verschiedenen Leitungen zum Transport der, insbesondere gasförmigen, Medien sind eine Anzahl von Ventilen und Sensoren bzw. Sonden vorgesehen, durch die jeweils die Durchflussmenge, die Zusammensetzung oder andere Messgrößen aufgenommen bzw. gesteuert werden. Dabei sind an der Leitung 24 zur Zuführung des Sauerstoffes Sensoren zur Aufnahme der Konzentration 35, sowie Durchflussmesser/Ventile 36 zur Steuerung der Duchflussmenge angebracht. An der Leitung zur Zuführung des Heizmediums 34 sowie an der Leitung 38 zur Ableitung des Heizmediums ist jeweils ein Sensor 37 zu Bestimmung der Temperatur des Heizmediums angebracht. An der Gasentstaubungsvorrichtung wird der Druckabfall des Abgases über einen Sensor 39 bestimmt. Schließlich ist nach dem Kondensator an einer Leitung 40 zum Ableiten des Restgases eine Sonde 41 zur Bestimmung des Kohlenmonoxid-, Kohlendioxid- und Sauerstoffgehaltes vorgesehen.

Die Prozesstemperatur wird über Temperaturmesssensoren 42 erfasst und stellt einen Leitwert für die Prozesssteuerung dar.

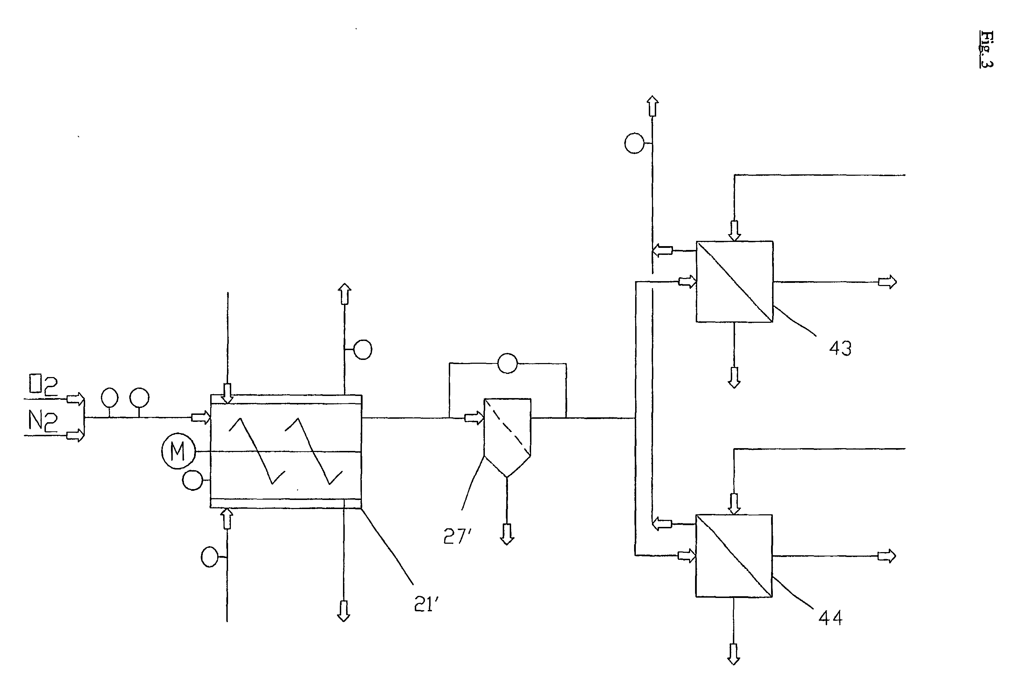

Fig. 3 stellt eine weitere bevorzugte, nicht einschränkende, Ausführungsform einer Vorrichtung zur Durchführung des erfindungsgemäßen Verfahrens dar, wobei die Vortrocknung und die weitere Behandlung des Abfallstoffes in einem einzigen Trockner 21' durchgeführt werden.

Die Vorrichtung unterscheidet sich von der in Fig. 2 dargestellten Ausführungsform, dadurch, dass nach der Entstaubungseinrichtung 27' zwei Kondensatoren 43, 44 vorgesehen sind. Dabei dient ein Kondensator 43 entsprechend dem Kondensator 14 in Fig. 1 der Kondensation von Wasserdampf, und ein zweiter Kondensator 44 entsprechend dem Kondensator 30 in Fig. 2 der Kondensation der Kohlenwasserstoffe.

Die dargestellte Vorrichtung wird chargenweise (batch-Betrieb) betrieben, wobei nach der thermischen Vortrocknung (Abdämpfen des Wassers) mittels eines Schiebers der Weg in den ersten Kondensator 43 geschlossen, und in den zweiten Kondensator 44 geöffnet wird. Die thermische Vortrocknung wird bei bedeutend niedrigeren Temperaturen durchgeführt, als die nachfolgende Behandlung zur Reinigung von den im Abfallstoff enthaltenen Kohlenwasserstoffen.

Bezüglich der nicht referenzierten Anlagenteile der Fig. 3 wird auf die Fig. 2 sowie auf die Beschreibung der Fig. 2 verwiesen, da es sich hierbei um äquivalente Anlagenteile handelt.

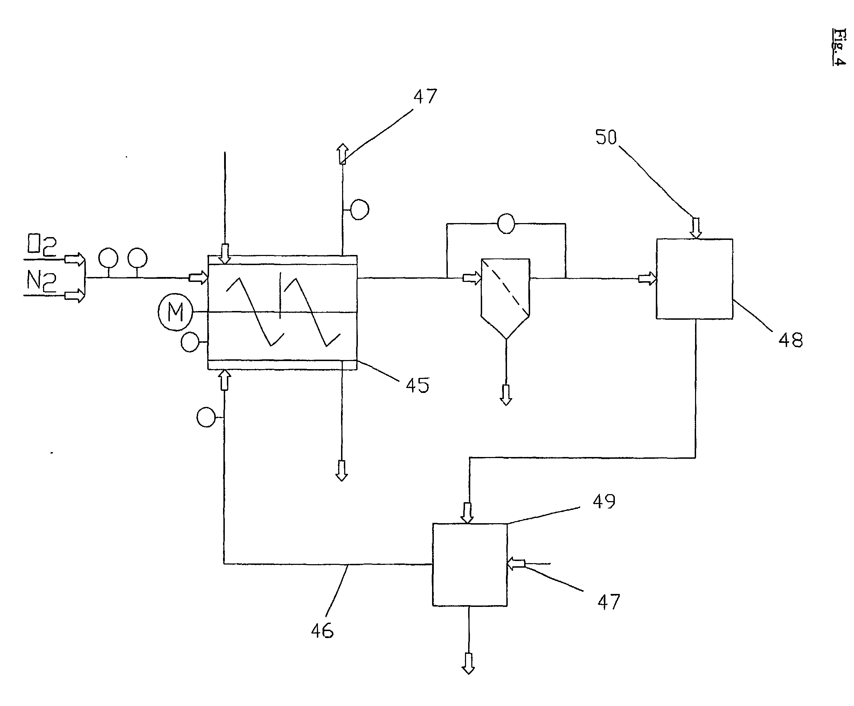

Fig. 4 stellt eine weitere bevorzugte, nicht einschränkende, Ausführungsform einer Vorrichtung zur Durchführung des erfindungsgemäßen Verfahrens dar, wobei das Verfahren chargenweise (Batch-Betrieb) arbeitet.

Die Vorrichtung unterscheidet sich von der in Fig. 2 dargestellten Ausführungsform, dadurch, dass das Abgas nach der Entstaubung oder Filterung in einer Nachbrennkammer 48 mit einem Brenner 50 thermisch nachverbrannt wird. Die Energie des Abgases wird mittels eines Wärmetauschers 49 zur Aufheizung des Gefäßes 45 mittels den Leitungen 47 und 46 genutzt

Bezüglich der nicht referenzierten Anlagenteile der Fig. 4 wird ebenfalls auf die Fig. 2 sowie auf die Beschreibung der Fig. 2 verwiesen, da es sich hierbei um äquivalente Anlagenteile handelt.

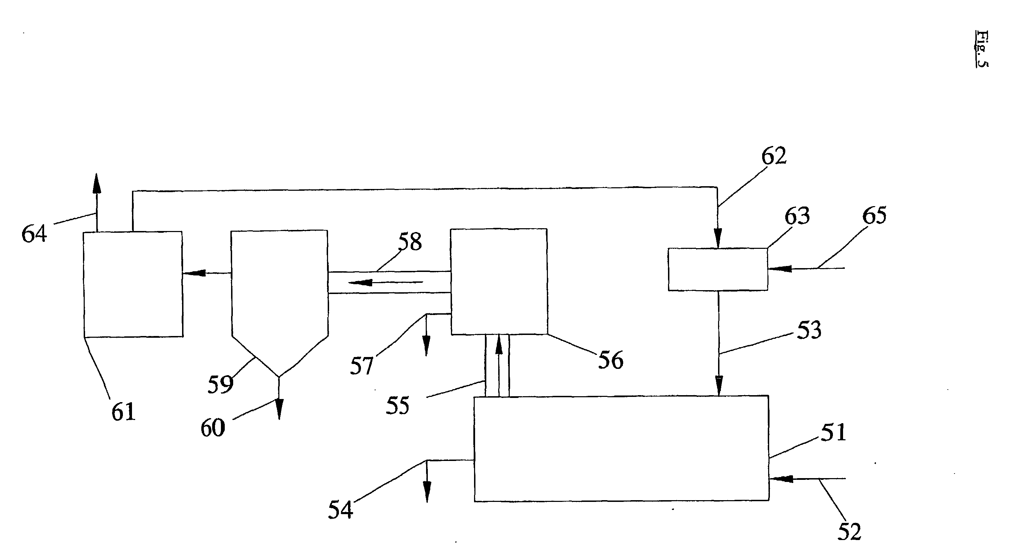

In Fig. 5 wird ein Trockner 51 über eine Förderleitung 52 mit, vorzugsweise vorentwässertem oder vorgetrocknetem, Walzzunderschlamm beschickt. Der Walzzunderschlamm ist dabei gegebenenfalls bereits durch thermische Behandlung entsprechend vorgetrocknet (Siehe Fig. 1), und weist einen niedrigen Wasser-Gehalt und einen hohen Gehalt an Kohlenwasserstoffen auf.

Dem Trockner 51 wird über eine Anzahl von Leitungen 53 Sauerstoff zugeführt. Neben Sauerstoff können weitere Gase, vorzugsweise Stickstoff, in den Trockner eingeleitet werden. In Fig. 5 ist ein quasikontinuierlicher Prozess dargestellt, wobei der Walzzunderschlamm durch einen Durchlauf-Trockner 51 gefördert, und schließlich durch eine Leitung 54 zur weiteren Verwendung abtransportiert wird. Die im Trockner entstehenden Abgase werden über eine beheizte Leitung 55 in eine wärmeisolierte und beheizte Gasentstaubungsvorrichtung 56 eingeleitet, wobei das Gas von Staub, der über eine Leitung 57 abgeleitet wird, getrennt wird. Das Gas wird weiter über eine beheizte Leitung 58 in einen Kondensator 59 befördert, in diesem Kondensator entspannt und abgekühlt, und die kondensierte Flüssigkeit über einen Abfluß 60 abgeleitet. Dabei sind vorzugsweise eine Anzahl von Kühlleitungen zur Kühlung des Kondensators vorgesehen.

Schließlich gelangt das Gas in einen Aktivkohlefilter 61 und wird von weiteren Verunreinigungen, beispielsweise Rest-Kohlenwasserstoffen, befreit.

Das gereinigte Gas ist nun für eine Weiterverwendung als Prozessgas geeignet, und zumindest ein Teil des Gases wird über eine Leitung 62 in eine Gasmischeinrichtung 63 eingeleitet. Restgas, welches sich nicht zur Weiterverwendung als Prozessgas eignet wird über eine Restgasleitung 64 abgeführt, und gegebenenfalls nachverbrannt.

In der Gasmischeinrichtung 63 wird das rückgeführte Gas gegebenenfalls mit Frischgas 65 aufbereitet, bevor es über die Leitung 53 in den Trockner 51 eingeleitet wird.

## Patentansprüche

1. Verfahren zur Behandlung eines kohlenwasserstoffhaltigen Abfallstoffes, insbesondere eines Walzzunderschlammes und/oder Schleifschlammes, wobei der Abfallstoff in einem Trockner, vorzugsweise unter Bewegung, durch indirekte Wärmezufuhr erwärmt und dabei von Kohlenwasserstoffen, gegebenenfalls gemeinsam mit anderen flüchtigen Komponenten, insbesondere H₂O, befreit wird und die Kohlenwasserstoffe, gegebenenfalls gemeinsam mit den anderen flüchtigen Komponenten, insbesondere mit dem H₂O, zumindest teilweise aus dem Gefäß abgeleitet, insbesondere abgesaugt, werden, **dadurch gekennzeichnet, dass** in dem Trockner bei einer Temperatur unterhalb von 400 °C ein gezielter Abbau der Kohlenwasserstoffe durchgeführt wird, wobei der Abbau der Kohlenwasserstoffe in Form einer Zerlegung der schwerflüchtigen Kohlenwasserstoffe in leichtflüchtige Kohlenwasserstoffe, vorzugsweise von Kohlenwasserstorfen mit hohem Molekulargewicht in Kohlenwasserstoffe mit niedrigerem Molekulargewicht, erfolgt und durch den - hinsichtlich der Regelgrößen
• Zusammensetzung des im Trockner entstehenden Abgases und
• Temperatur des im Trockner behandelten Abfallstoffes
bestimmten - geregelten und/oder gesteuerten quantitativen Einsatz eines oder mehrerer der folgenden chemischen Hilfsmittel
• Sauerstoff, insbesondere aus Sauerstoff/Inertgasmischungen oder mit Sauerstoff angereicherter Luft und/oder einem anderen Sauerstoffträger,
• festes und/oder flüssiges und/oder gasförmiges Peroxid oder Hyperoxid, vorzugsweise Wasserstoffperoxid,
• Ozon,
durchgeführt wird.

2. Verfahren nach Anspruch 1, wobei der zu behandelnde Abfallstoff metallische Bestandteile aufweist.

3. Verfahren nach Anspruch 1 oder 2, **dadurch gekennzeichnet, dass** ein Katalysator als weiteres chemisches Hilfsmittel zum Abbau der Kohlenwasserstoffe eingesetzt wird.

4. Verfahren nach einem oder mehreren der Ansprüche 1 bis 3, **dadurch gekennzeichnet, dass** in dem Trockner zumindest zu einem Zeitpunkt während der Behandlung des Abfallstoffes ein Sauerstoffanteil, vorzugsweise bezogen auf trockene Luft, von größer als 20,8 Vol%, bevorzugt ein Sauerstoffanteil, vorzugsweise bezogen auf trockene Luft, von 25 bis *50* Vol%, eingestellt wird.

5. Verfahren nach einem oder mehreren der Ansprüche 1 bis 4, **dadurch gekennzeichnet, dass** als strahlungstechnisches Hilfsmittel zum Abbau der Kohlenwasserstoffe hochenergetische Strahlung, insbesondere in Form von UV-Strahlung, in den Trockner eingebracht wird.

6. Verfahren nach einem oder mehreren der Ansprüche 1 bis 5, **dadurch gekennzeichnet, dass** die indirekte Wärmezufuhr über den Gefäßmantel des Trockners, insbesondere über den Gefäßmantel der Behandlungskammer des Trockners, oder sonstige Einbauten des Trockners erfolgt.

7. Verfahren nach einem oder mehreren der Ansprüche 1 bis 6, **dadurch gekennzeichnet, dass** die indirekte Wärmezufuhr über Mikrowellenstrahlung erfolgt

8. Verfahren nach einem oder mehreren der Ansprüche 1 bis 7, **dadurch gekennzeichnet, dass** in dem Trockner eine auf das Einsatzmaterial bezogene maximale Temperatur von 350°C, insbesondere 300°C oder 270°C, eingestellt wird.

9. Verfahren nach einem oder mehreren der Ansprüche 1 bis 8, **dadurch gekennzeichnet, dass** eine Steuerung und/oder Regelung der Prozessparameter der Behandlung im Trockner, insbesondere der Bewegungsintensität im Trockner und/oder der Heizleistung im Trockner und/oder der Temperatur des Abfallstoffes und/oder des quantitativen Einsatzes eines strahlungstechnischen Hilfsmittels zum Abbau der Kohlenwasserstoffe, durchgeführt wird.

10. Verfahren nach einem oder mehreren der Ansprüche 1 bis 9, **dadurch gekennzeichnet, dass** der Abfallstoff vor der Behandlung mechanisch entwässert undloder chemisch und/oder thermisch vorgetrocknet wird, wobei vorzugsweise zusätzliches, gegebenenfalls abzuleitendes, Abgas entsteht.

11. Verfahren nach Anspruch 10, **dadurch gekennzeichnet, dass** die thermische Vortrocknung in einem, gegebenenfalls weiteren, Trockner durchgeführt wird, wobei der Abfallstoff bei niedriger Temperatur durch, insbesondere indirekte, Erwärmung von leicht-flüchtigen Komponenten, insbesondere von Wasser, befreit wird.

12. Verfahren nach Anspruch 10 oder 11, **dadurch gekennzeichnet, dass** die, insbesondere thermische, Vortrocknung bei einer Temperatur von 40-200 °C, insbesondere 90-110 °C durchgeführt wird.

13. Verfahren nach einem oder mehreren der Ansprüche 1 bis 12, **dadurch gekennzeichnet, dass** die, vorzugsweise vorentstaubten, Abgase thermisch oder katalytisch nachverbrannt werden.

14. Verfahren nach Anspruch 13, **dadurch gekennzeichnet, dass** die Energie aus der thermischen oder katalytischen Nachverbrennung zur Beheizung eines oder mehrerer Trockner und/oder weiterer Vorrichtungen zur Durchführung des Verfahrens verwendet wird.

15. Verfahren nach einem oder mehreren der Ansprüche 1 bis 14, **dadurch gekennzeichnet, dass** der Kohlenmonoxid- und/oder der Kohlendioxid- und/oder der Wasserstoff- und/oder der Sauerstoff- und/oder der Kohlenwasserstoff-Gehalt des Abgases des Trockenprozesses gemessen wird, und gegebenenfalls aufgrund der ermittelten Messgrößen eine Regelung der Prozessparameter durchgeführt wird.

16. Verfahren nach einem oder mehreren der Ansprüche 1 bis 15, **dadurch gekennzeichnet, dass**, insbesondere zur Eindämmung der Sauerstoff- und/oder Wasserstoffkonzentration, der Trockner mit einem Inertgas, insbesondere Stickstoff, gespült wird.

17. Vorrichtung zur Behandlung eines kohlenwasserstoffhaltigen Abfallstoffes, vorzugsweise zur Durchführung eines Verfahrens nach einem oder mehreren der Ansprüche 1 bis 16, mit einem indirekt beheizbaren Trockner (21) zur Erwärmung eines kohlenwasserstoffhältigen Abfallstoffes, insbesondere eines Walzzunderschlammes und/oder Schleifschlammes, in einer Behandlungskammer mit einer Fördereinrichtung zur Aufgabe des Abfallstoffes in die Behandlungskammer und einer Fördereinrichtung zum Abziehen des behandelten Abfallstorfes aus der Behandlungskammer sowie gegebenenfalls mit einer, das bei der Behandlung entstandene Gas ableitenden, Gasleitung, **dadurch gekennzeichnet, dass** an dem Trockner (21) eine Einrichtung zur Zerlegung der im Abfallstoff enthaltenen schwerflüchtigen Kohlenwasserstoffe in leichtflüchtige Kohlenwasserstoffe, vorzugsweise von Kohlenwasserstoffen mit hohem Molekulargewicht in Kohlenwasserstoffe mit niedrigerem Molekulargewicht, durch eines oder mehrere der folgenden chemischen Hilfsmittel
• Sauerstoff, insbesondere Sauerstoff/Inertgasmischungen oder mit Sauerstoff angereicherte Luft, und/oder andere Sauerstoffträger
• festes und/oder flüssiges und/oder gasförmiges Peroxid oder Hyperoxid, vorzugsweise Wasserstoffperoxid,
• Ozon,
angeordnet ist, wobei der quantitative Einsatz des chemischen Hilfsmittels auf Basis der Regelgrößen
• Zusammensetzung des im Trockner entstehenden Abgases und
• Temperatur des im Trockner behandelten Abfallstoffes,
über eine entsprechende Regeleinrichtung regelbar und/oder steuerbar ist.

18. Vorrichtung nach Anspruch 17, **dadurch gekennzeichnet, dass** als Einrichtung zur Zerlegung der Kohlenwasserstoffe ein Fördermittel zur Zurühr von Sauerstoff- und/oder Peroxid-/Hyperoxid- und/oder Ozon-Trägern in die Behandlungskammer des Trockners vorgesehen Ist.

19. Vorrichtung nach Anspruch 17 oder 18, **dadurch gekennzeichnet, dass** als eine weitere Einrichtung zur Zerlegung der Kohlenwasserstoffe eine Strahlungsquelle zur Bestrahlung des Abfallstoffes in der Behandlungskammer des Trockners, insbesondere mit UV-Strahlung, vorgesehen ist.

20. Vorrichtung nach einem oder mehreren der Ansprüche 17 bis 19, **dadurch gekennzeichnet, dass** am Trockner eine Leitung zur Zufuhr von Trägergas, insbesondere Inertgas, vorgesehen ist.

21. Vorrichtung nach einem oder mehreren der Ansprüche 17 bis 20, **dadurch gekennzeichnet, dass** im Trockner eine Einrichtung zur Bewegung des Abfallstoffes vorgesehen ist und/oder der Behandlungsraum selbst drehbar ausgeführt ist.

22. Vorrichtung nach einem oder mehreren der Ansprüche 17 bis 21, **dadurch gekennzeichnet, dass** eine wärmeisolierte und/oder, vorzugsweise indirekt, beheizbare Entstaubungseinrichtung (27) zur Entstaubung der aus der Behandlungskammer abgeleitenden Gase vorgesehen ist, die gegebenenfalls über eine Anzahl von wärmeisolierten und/oder zusätzlich beheizbaren Leitungen (26, 29) einerseits mit dem Trockner sowie andererseits gegebenenfalls mit weiteren Einrichtungen zur Behandlung der aus dem Trockner abgesaugten Gase, verbunden ist.

23. Vorrichtung nach einem oder mehreren der Ansprüche 17 bis 22, **dadurch gekennzeichnet, dass** im Trockner (21) freibewegliche Körper, insbesondere Schlagstangen, vorgesehen sind, die gegebenenfalls auftretende Anbackungen von Abfallstoffen im Trockner (21), insbesondere in der Behandlungskammer des Trockners, lösen sowie eine Agglomeratbildung verringern.

24. Vorrichtung nach einem oder mehreren der Ansprüche 17 bis 23, **dadurch gekennzeichnet, dass**
• an der Gasableitung zur Ableitung der in der Behandlungskammer entstandenen Gase und/oder
• an dem Trockner
eine oder mehrere Sonden und/oder Sensoren angebracht sind, womit die Temperatur und/oder Zusammensetzung des abzuleitenden Gases und/oder die Temperatur im Gefäß bestimmbar ist.

25. Vorrichtung nach einem oder mehreren der Ansprüche 17 bis 24, **dadurch gekennzeichnet, dass** die Einrichtung zur indirekten Beheizung des Trockners und/oder die Einrichtung (23) zur Bewegung des Abfallstoffes in der Behandlungskammer regelbar ausgerührt sind.

## Claims

1. Process for treating a hydrocarbonaceous waste material, in particular a rolling scale slurry and/or grinding slurry, the waste material being heated in a dryer, preferably moving, by the indirect supply of heat, and in the process hydrocarbons, if appropriate together with other volatile components, in particular H₂O, being removed and the hydrocarbons, if appropriate together with the other volatile components, in particular together with the H₂O, being at least partially discharged, in particular by suction, from the vessel, **characterized in that** in the dryer, at a temperature below 400°C, the hydrocarbons are broken down in a targeted way, the breaking down of the hydrocarbons taking place in the form of decomposition of the hydrocarbons of low volatility into highly volatile hydrocarbons, preferably high molecular weight hydrocarbons into lower molecular weight hydrocarbons, and being carried out by the regulated and/or controlled quantitative use - specifically with regard to the control variables
• composition of the exhaust gas formed in the dryer, and
• temperature of the waste material treated in the dryer
- of one or more of the following chemical auxiliaries
• oxygen, in particular from oxygen/inert gas mixtures or oxygen-enriched air and/or another oxygen carrier,
• solid and/or liquid and/or gaseous peroxide or hyperoxide, preferably hydrogen peroxide,
• ozone.

2. Process according to Claim 1, in which the waste material which is to be treated includes metallic constituents.

3. Process according to Claim 1 or 2, **characterized in that** a catalyst is used as a further chemical auxiliary for breaking down the hydrocarbons.

4. Process according to one or more of Claims 1 to 3, **characterized in that** in the dryer an oxygen level, preferably based on dry air, of greater than 20.8% by volume, preferably an oxygen level, preferably based on dry air, of 25 to 50% by volume, is set at least at one time during the treatment of the waste material.

5. Process according to one or more of Claims 1 to 4, **characterized in that** high-energy radiation, in particular in the form of UV radiation, is introduced into the dryer as a radiation means for breaking down the hydrocarbons.

6. Process according to one or more of Claims 1 to 5, **characterized in that** the indirect supply of heat takes place via the vessel shell of the dryer, in particular via the vessel shell of the treatment chamber of the dryer, or other internals of the dryer.

7. Process according to one or more of Claims 1 to 6, **characterized in that** the indirect supply of heat takes place by means of microwave radiation.

8. Process according to one or more of Claims 1 to 7, **characterized in that** a maximum temperature, based on the charge material, of 350°C, in particular 300°C or 270°C, is established in the dryer.

9. Process according to one or more of Claims 1 to 8, **characterized in that** the process parameters of the treatment in the dryer, in particular the movement intensity in the dryer and/or the heating capacity in the dryer and/or the temperature of the waste material and/or the quantitative use of a radiation means for breaking down the hydrocarbons, are controlled and/or regulated.

10. Process according to one or more of Claims 1 to 9, **characterized in that** the waste material, prior to the treatment, is mechanically dewatered and/or chemically and/or thermally pre-dried, during which process additional exhaust gas, which if appropriate is to be discharged, is preferably formed.

11. Process according to Claim 10, **characterized in that** the thermal pre-drying is carried out in a (possibly further) dryer, highly volatile components, in particular water, being removed from the waste material at low temperature by, in particular indirect, heating.

12. Process according to Claim 10 or 11, **characterized in that** the, in particular thermal, pre-drying is carried out at a temperature of 40-200°C, in particular 90-110°C.

13. Process according to one or more of Claims 1 to 12, **characterized in that** the, preferably pre-dedusted, exhaust gases undergo thermal or catalytic post-combustion.

14. Process according to Claim 13, **characterized in that** the energy from the thermal or catalytic post-combustion is used to heat one or more dryers and/or further devices for carrying out the process.

15. Process according to one or more of Claims 1 to 14, **characterized in that** the carbon monoxide content and/or the carbon dioxide content and/or the hydrogen content and/or the oxygen content and/or the hydrocarbon content of the exhaust gas from the drying process is measured, and the process parameters are regulated if appropriate on the basis of the measured variables determined.

16. Process according to one or more of Claims 1 to 15, **characterized in that** the dryer is purged with an inert gas, in particular nitrogen, in particular for the purpose of restricting the oxygen and/or hydrogen concentration.

17. Apparatus for treating a hydrocarbonaceous waste material, preferably for carrying out a process according to one or more of Claims 1 to 16, having an indirectly heatable dryer (21) for heating a hydrocarbonaceous waste material, in particular a rolling scale slurry and/or grinding slurry, in a treatment chamber with a conveyor device for adding the waste material to the treatment chamber and a conveyor device for removing the treated waste material from the treatment chamber and, if appropriate, having a gas line which discharges the gas formed during the treatment, **characterized in that** a device for decomposing the hydrocarbons of low volatility contained in the waste material into highly volatile hydrocarbons, preferably for decomposing high molecular weight hydrocarbons into lower molecular weight hydrocarbons, by means of one or more of the following chemical auxiliaries
• oxygen, in particular oxygen/inert gas mixtures or oxygen-enriched air and/or another oxygen carrier,
• solid and/or liquid and/or gaseous peroxide or hyperoxide, preferably hydrogen peroxide,
• ozone,
is arranged on the dryer (21), it being possible for a corresponding control device to regulate and/or control the quantitative use of the chemical auxiliary on the basis of the following control variables
• composition of the exhaust gas formed in the dryer, and
• temperature of the waste material treated in the dryer.

18. Apparatus according to Claim 17, **characterized in that** a conveyor means for feeding oxygen carriers and/or peroxide/hyperoxide carriers and/or ozone carriers into the treatment chamber of the dryer is provided as the device for decomposing the hydrocarbons.

19. Apparatus according to Claim 17 or 18, **characterized in that** a radiation source for irradiating the waste material in the treatment chamber of the dryer, in particular with UV radiation, is provided as a further device for decomposing the hydrocarbons.

20. Apparatus according to one or more of Claims 17 to 19, **characterized in that** a line for supplying carrier gas, in particular inert gas, is provided on the dryer.

21. Apparatus according to one or more of Claims 17 to 20, **characterized in that** a device for moving the waste material is provided in the dryer and/or the treatment space itself is of rotatable design.

22. Apparatus according to one or more of Claims 17 to 21, **characterized in that** a thermally insulated and/or, preferably indirectly, heatable dedusting device (27) for dedusting the gases emerging from the treatment chamber is provided, which device, if appropriate, is connected, via a number of thermally insulated and/or additionally heatable lines (26, 29), to the dryer on the one hand and if appropriate to further devices for treating the gases extracted from the dryer, on the other hand.

23. Apparatus according to one or more of Claims 17 to 22, **characterized in that** freely movable bodies, in particular beater bars, which detach any caking of waste materials in the dryer (21), in particular in the treatment chamber of the dryer, and reduce the formation of agglomerates, are provided in the dryer (21) .

24. Apparatus according to one or more of Claims 17 to 23, **characterized in that** one or more probes and/or sensors, by means of which the temperature and/or composition of the gas to be discharged and/or the temperature in the vessel can be determined, are arranged
• on the gas discharge line for discharging the gases formed in the treatment chamber, and/or
• on the dryer.

25. Apparatus according to one or more of Claims 17 to 24, **characterized in that** the device for indirect heating of the dryer and/or the device (23) for moving the waste material in the treatment chamber are designed so that they can be regulated.

## Revendications

1. Procédé de traitement d'un déchet contenant des hydrocarbures, en particulier d'une boue résiduelle à base de mâchefer et/ou d'une boue de rectification, le déchet étant échauffé dans un sécheur, de préférence soumis à des mouvements, par apport indirect de chaleur, et étant ainsi débarrassé des hydrocarbures, le cas échéant, conjointement à d'autres composants volatils, en particulier de H₂O, et les hydrocarbures, le cas échéant, conjointement aux autres composants volatils, en particulier H₂O, étant évacués, tout au moins partiellement, hors du récipient, étant, en particulier, soumis à une aspiration, **caractérisé en ce que**, dans le sécheur, à une température en dessous de 400 °C, l'on effectue une dégradation ciblée des hydrocarbures, la dégradation des hydrocarbures se faisant sous la forme d'une décomposition des hydrocarbures peu volatils en hydrocarbures facilement volatils, de préférence des hydrocarbures ayant un poids moléculaire élevé en hydrocarbures ayant un poids moléculaire plus faible et étant exécutée par l'intermédiaire de l'utilisation quantitative, réglée et/ou commandée, déterminée, pour ce qui est des grandeurs de réglage,
• par la composition du gaz de rejet se formant dans le sécheur et
• par la température du déchet traité dans le sécheur, d'un ou de plusieurs des adjuvants chimiques suivants, à savoir
• l'oxygène, en particulier en provenance de mélanges de gaz inertes/d'oxygène ou de l'air enrichi en oxygène et/ou un autre vecteur d'oxygène,
• un peroxyde ou un hyper oxyde solide et/ou liquide et/ou gazeux, de préférence le peroxyde d'oxygène,
• l'ozone.

2. Procédé selon la revendication 1, le déchet à traiter présentant des constituants métalliques.

3. Procédé selon la revendication 1 ou 2, **caractérisé en ce que** l'on utilise un catalyseur en tant qu'adjuvant chimique supplémentaire en vue de la dégradation des hydrocarbures.

4. Procédé selon l'une quelconque des revendications 1 à 3, **caractérisé en ce que** l'on règle, dans le sécheur, tout au moins à un moment pendant le traitement du déchet, une proportion d'oxygène, de préférence par rapport à l'air sec, de plus de 20, 8% en volume, de préférence une proportion d'oxygène, de préférence par rapport à l'air sec, de 25 à 50% en volume.

5. Procédé selon l'une quelconque des revendications 1 à 4, **caractérisé en ce que** l'on introduit, dans le sécheur, en tant qu'adjuvant de technique de rayonnement, en vue de la dégradation des hydrocarbures, un rayonnement de forte énergie sous la forme d'un rayonnement UV.

6. Procédé selon l'une quelconque des revendications 1 à 5, **caractérisé en ce que** l'apport de chaleur indirect se fait par l'intermédiaire de l'enveloppe du récipient du sécheur, en particulier par l'intermédiaire de l'enveloppe de récipient de la chambre de traitement du sécheur ou par l'intermédiaire d'autres structures encastrées du sécheur.

7. Procédé selon l'une quelconque des revendications 1 à 6, **caractérisé en ce que** l'apport de chaleur indirect se fait par l'intermédiaire d'un rayonnement micro ondes.

8. Procédé selon l'une quelconque des revendications 1 à 7, **caractérisé en ce que** l'on règle, dans le sécheur, une température maximale relative au matériau de charge, de 350°C, en particulier de 300°C ou de 270°C.

9. Procédé selon l'une quelconque des revendications 1 à 8, **caractérisé en ce que** l'on effectue une commande et/ou une régulation des paramètres de processus du traitement dans le sécheur, en particulier de l'intensité du mouvement dans le sécheur et/ou de la puissance de chauffe dans le sécheur et/ou de la température du déchet et/ou de l'utilisation quantitative d'un adjuvant de technique de rayonnement en vue de la dégradation des hydrocarbures.

10. Procédé selon l'une quelconque des revendications 1 à 9, **caractérisé en ce que** le déchet est soumis, avant le traitement, à une déshydratation par voie mécanique et/ou à un séchage par voie chimique et/ou par voie thermique, avec, de préférence, formation d'un gaz de rejet supplémentaire, qui est ,le cas échéant, à évacuer.

11. Procédé selon la revendication 10, **caractérisé en ce que** le séchage thermique préalable est effectué dans un sécheur, le cas échéant supplémentaire, le déchet étant débarrassé des composant facilement volatils, en particulier de l'eau, par échauffement, en particulier indirect, à une température inférieure.

12. Procédé selon la revendication 10 ou 11, **caractérisé en ce que** le séchage préalable, en particulier thermique, est effectué à une température de 40-200°C, en particulier de 90-110°C.

13. Procédé selon l'une quelconque des revendications 1 à 12, **caractérisé en ce que** les gaz de rejet, de préférence mis au préalable sous la forme de poussières, subissent une combustion ultérieure par voie thermique ou catalytique.

14. Procédé selon la revendication 13, **caractérisé en ce que** l'énergie en provenance de la combustion ultérieure par voie thermique ou par voie catalytique, est utilisée en vue du chauffage d'un ou de plusieurs sécheurs et/ou de dispositifs supplémentaires destinés à l'exécution du procédé.

15. Procédé selon l'une quelconque des revendications 1 à 14, **caractérisé en ce que** la teneur en monoxyde de carbone et/ou en dioxyde de carbone et/ou en hydrogène et/ou en oxygène et/ou en hydrocarbures, du gaz de rejet du processus de séchage est mesurée et **en ce qu'**en fonction des grandeurs de mesure déterminées, l'on effectue un réglage des paramètres de processus.

16. Procédé selon l'une quelconque des revendications 1 à 15, **caractérisé en ce que** le sécheur, en vue, en particulier, de la limitation de la concentration en oxygène et/ou en hydrogène, est purgé à l'aide d'un gaz inerte, en particulier à l'aide d'azote.

17. Dispositif en vue du traitement d'un déchet contenant des hydrocarbures, de préférence en vue de l'exécution d'un procédé selon l'une quelconque des revendications 1 à 16, avec un sécheur à capacité de chauffage indirect (21) en vue de l'échauffement d'un déchet contenant des hydrocarbures, en particulier d'une boue résiduelle à base de mâchefer et/ou d'une boue de rectification, dans une chambre de traitement avec un équipement d'acheminement en vue de la décharge du déchet à traiter dans la chambre de traitement et avec un équipement d'acheminement en vue du retrait du déchet traité hors de la chambre de traitement, ainsi que, le cas échéant, avec un conduit de gaz, qui évacue le gaz se formant lors du traitement, **caractérisé en ce que**, dans le sécheur (21), à une température en dessous de 400°C, l'on dispose un équipement en vue de la décomposition des hydrocarbures peu volatils contenus dans le déchet en hydrocarbures facilement volatils, de préférence d'hydrocarbures ayant un poids moléculaire élevé en hydrocarbures ayant un poids moléculaire plus faible par l'intermédiaire d'un ou de plusieurs des adjuvants chimiques suivants, à savoir
• l'oxygène, en particulier en provenance de mélanges de gaz inertes/oxygène ou de l'air enrichi en oxygène et/ou un autre vecteur d'oxygène,
• un peroxyde ou un hyper oxyde solide et/ou liquide et/ou gazeux, de préférence le peroxyde d'oxygène,
• l'ozone, l'utilisation quantitative de l'adjuvant chimique pouvant être réglée et/ou commandée sur la base des grandeurs de réglage
• composition du gaz de rejet se formant dans le sécheur et
• température du déchet traité dans le sécheur.

18. Dispositif selon la revendication 17, **caractérisé en ce que** l'on prévoit, en tant qu'équipement en vue de la décomposition des hydrocarbures, un moyen d'acheminement en vue de l'alimentation d'oxygène et/ou de peroxyde/d'hyper oxyde et/ou d'agent vecteur d'ozone dans la chambre de traitement du sécheur.

19. Dispositif selon la revendication 17 ou 18, **caractérisé en ce que** l'on prévoit, en tant qu'équipement supplémentaire en vue de la décomposition des hydrocarbures, une source de rayonnement en vue de l'irradiation du déchet dans la chambre de traitement du sécheur, en particulier à l'aide d'un rayonnement UV.

20. Dispositif selon l'une quelconque des revendications 17 à 19, **caractérisé en ce que** l'on prévoit au sécheur un conduit en vue de l'apport du gaz vecteur, en particulier de gaz inerte.

21. Dispositif selon l'une quelconque des revendications précédentes 17 à 20, **caractérisé en ce que** l'on prévoit, dans le sécheur, un équipement en vue de la mise en mouvement du déchet et/ou **en ce que** l'espace de traitement lui-même est capable d'être soumis à une rotation.

22. Dispositif selon l'une quelconque des revendications 17 à 21, **caractérisé en ce que** l'on prévoit un équipement de dépoussiérage isolé du point de vue thermique et/ou capable d'être chauffé, de préférence d'une manière indirecte, (27), en vue du dépoussiérage des gaz évacués de la chambre de traitement, qui est relié, le cas échéant par l'intermédiaire d'un certain nombre de conduits isolés du point de vue thermique et/ou capables d'être chauffés de manière supplémentaire (26, 29), d'une part avec le sécheur ainsi que, d'autre part, avec des équipements supplémentaires en vue du traitement des gaz aspirés hors du sécheur.

23. Dispositif selon l'une quelconque des revendications 17 à 22, **caractérisé en ce que** l'on prévoit, dans le sécheur (21), des corps que l'on peut déplacer librement, en particulier des tiges d'impact, qui détachent les dépôts de cuisson se formant, le cas échéant, en provenance de déchets dans le sécheur (21), en particulier dans la chambre de traitement du sécheur, et qui réduisent la formation d'agglomérats.

24. Dispositif selon l'une quelconque des revendications 17 à 23, **caractérisé en ce que** l'on dispose
• au conduit de gaz en vue de l'évacuation des gaz se formant dans la chambre de traitement et/ou
• au sécheur,
une ou plusieurs sondes et/ou un ou plusieurs détecteurs, la température et/ou la composition du gaz à évacuer et/ou la température dans le récipient pouvant être déterminées.

25. Dispositif selon l'une quelconque des revendications 17 à 24, **caractérisé en ce que** l'équipement en vue du chauffage indirect du sécheur et/ou l'équipement (23) en vue du mouvement du déchet dans la chambre de traitement sont exécuté(s) d'une manière réglable.
